# EUROPÄISCHE PATENTSCHRIFT

(11) **EP 4 330 143 B1**
(45) Veröffentlichungstag und Bekanntmachung des Hinweises auf die Patenterteilung: **02.07.2025**
(21) Anmeldenummer: 22725241.8
(22) Anmeldetag: 25.04.2022
(51) Int. Cl.: B65B 57/10, G01N 21/90, B65B 3/00, B65B 5/10

(54) **PRÜFVORRICHTUNG UND VERFAHREN ZUM PRÜFEN VON BEHÄLTERN**
TESTING DEVICE AND METHOD FOR TESTING CONTAINERS
DISPOSITIF DE VÉRIFICATION ET PROCÉDÉ DE VÉRIFICATION DE RÉCIPIENTS

(30) Priorität: 28.04.2021 EP 21171017
(43) Veröffentlichungstag der Anmeldung: 06.03.2024
(73) Patentinhaber: Uhlmann Pac-Systeme GmbH & Co. KG, 88471 Laupheim (DE)
(72) Erfinder: KRONAWITTER, Michael, 88471 Laupheim (DE)
(74) Vertreter: Wächter, Jochen
(86) Internationale Anmeldenummer: PCT/EP2022/060879
(87) Internationale Veröffentlichungsnummer: WO 2022/229089

(56) Entgegenhaltungen:
- JP-A- 2008 213 893
- JP-A- 2020 137 468
- JP-A- S61 278 990
- US-B2- 7 343 943

## Beschreibung

Die vorliegende Erfindung betrifft eine Prüfvorrichtung, eine Verpackungsmaschine mit einer solchen Prüfvorrichtung sowie ein Verfahren zum Prüfen von Behältern für einnehmbare Produkte, insbesondere medizinische oder pharmazeutische Produkte oder Nahrungs- oder Nahrungsergänzungsmitteln, auf Fremdkörper, insbesondere auf metallische Fremdkörper.

Verpackungsmaschinen zum Befüllen von Flaschen und flaschenähnlichen Behältern, die hierin allgemein als Behälter bezeichnet werden, mit einnehmbaren Produkten, wie z.B. medizinischen oder pharmazeutischen Produkten oder von Nahrungs- oder Nahrungsergänzungsmitteln, und zum Verschließen der befüllten Behälter werden auch als Flaschenlinien bezeichnet. Neben einer Fülleinheit zum Befüllen der Behälter und einer Verschließeinheit zum Verschließen der befüllten Behälter kann eine solche Flaschenlinie weiterhin Zuführeinheiten für Trockenmittel und/oder Wattebauschen umfassen. Es sind kontinuierlich und getaktet betriebene Flaschenlinien bekannt, bei denen die Behälter die Flaschenlinie entsprechend kontinuierlich bzw. getaktet durchlaufen.

In der Verpackungsmaschine besteht die Gefahr, dass Fremdkörper, wie zum Beispiel metallische Fremdkörper, in die noch unverschlossenen Behälter geraten. Behälter, die solche Fremdkörper enthalten, müssen zuverlässig erkannt werden können und dürfen nicht in den Vertrieb gelangen.

Aus der WO 2013/119741 A1 und der WO 2015/092010 A1 sind beispielsweise Metalldetektoren bekannt, die tunnelförmig ausgebildet sind und eine Durchgangsöffnung aufweisen, durch die ein Förderband zum Fördern von zu prüfenden Produkten geführt ist. Weiter offenbart JP 2008 213893 A eine Prüfvorrichtung mit Förderband, bei der mehrere Trägerelemente und eine Sensor-Einrichtung beweglich zueinander angeordnet sind, und wobei der Sensor einerseits beabstandet zu den zu prüfenden Behältern angeordnet wird, andererseits die zu prüfenden Behälter zumindest teilweise umgibt.

Derartige Metalldetektoren eignen sich häufig nicht zum Einsatz in getaktet betriebenen Flaschenlinien, zum Beispiel wenn die Behälter nicht auf einem Förderband gefördert werden, und können sehr teuer sein, was zu hohen Kosten der gesamten Flaschenlinie beiträgt. Enthalten die Kappen oder Deckel der Behälter zudem (metallische) Siegel, kann der Einsatz von Röntgengeräten zur Prüfung des Behälterinhalts auf metallische Fremdkörper erforderlich sein, was ebenfalls sehr kostspielig ist.

Es ist daher eine Aufgabe der vorliegenden Erfindung, eine Prüfvorrichtung, eine Verpackungsmaschine und ein Verfahren bereitzustellen, die eine einfache und kostengünstige Prüfung des Behälterinhalts auf Fremdkörper, insbesondere auf metallische Fremdkörper, bei getaktet betriebenen Verpackungsmaschinen ermöglichen.

Diese Aufgabe wird durch den Gegenstand der Ansprüche 1, 8 und 11 gelöst. Bevorzugte Ausführungsformen sind Gegenstand der abhängigen Ansprüche.

Eine erfindungsgemäße Prüfvorrichtung für eine Verpackungsmaschine zum Verpacken von einnehmbaren Produkten, insbesondere von medizinischen oder pharmazeutischen Produkten oder von Nahrungs- oder Nahrungsergänzungsmitteln, in Behälter ist in Anspruch 1 definiert.

Auf diese Art und Weise wird eine Prüfvorrichtung bereitgestellt, mittels derer getaktet geförderte Behälter in einer Verpackungsmaschine, wie zum Beispiel einer Flaschenlinie, einfach auf Fremdkörper und vor allem auf metallische Fremdkörper geprüft werden können.

Dass eine Relativbewegung zwischen den Sensoren und den zu prüfenden Behälter in der Bewegungsrichtung erzeugbar ist, wird dadurch erreicht, dass entweder nur die Sensoren bewegbar sind und die Trägerelemente mit dem zu prüfenden Behälter im Prüfbereich stationär angeordnet sind, oder die Sensoren stationär angeordnet sind und nur die Trägerelemente mit den zu prüfenden Behältern bewegbar sind, oder sowohl die Sensoren als auch die Trägerelemente mit den zu prüfenden Behältern bewegbar sind. Um einen einfachen und kostengünstigen Aufbau zu ermöglichen, ist bevorzugt nur die Mehrzahl von Trägerelementen beweglich auszubilden.

Vorzugsweise ist jeder zu prüfende Behälter der Mehrzahl von Behältern im Prüfbereich bereits mit einnehmbaren Produkten befüllt. Insbesondere ist jeder Behälter mit einer Vielzahl von einnehmbaren Produkten befüllt, die vorzugsweise zwischen 10 und 200, mehr bevorzugt zwischen 10 und 150, noch mehr bevorzugt zwischen 10 und 120 Produkte umfasst. Gegebenenfalls kann zudem jeder zu prüfende Behälter bereits verschlossen sein. So kann verhindert werden, dass nach der Prüfung der Mehrzahl von Behältern durch die Prüfvorrichtung Fremdkörper in die Behälter gelangen.

Im Allgemeinen sind die einnehmbaren Produkte bevorzugt medizinische Produkte, pharmazeutische Produkte, Nahrungsmittel oder Nahrungsergänzungsmittel.

Bei den einnehmbaren Produkten handelt es sich bevorzugt um Solida, wie zum Beispiel Tabletten, Dragées oder Kapseln. Die einnehmbaren Produkte liegen vorzugsweise lose bzw. als Schüttgut vor. Dies trifft sowohl auf medizinische oder pharmazeutische Produkte, wie Arzneimittel, als auch auf Nahrungs- und Nahrungsergänzungsmittel zu. Bei den Lebensmitteln kann es sich beispielsweise um Kaugummis, Pastillen, Bonbons oder dergleichen handeln. Bei den Nahrungsergänzungsmitteln handelt es sich z.B. um Mineralien, Vitamine, Fettsäuren oder dergleichen in Pulver-, Tabletten- oder Kapselform.

Die Behälter der Mehrzahl von Behältern sind dazu eingerichtet, die einnehmbaren Produkte lose aufzunehmen. Mit anderen Worten sind die Behälter dazu eingerichtet, unverpackte, einzeln handhabbare bzw. als Schüttgut vorliegende einnehmbare Produkte aufzunehmen. Bei den einnehmbaren Produkten kann es sich aber auch um Liquidaprodukte handeln. Die Behälter der Mehrzahl von Behältern sind dann dazu eingerichtet, die Liquidaprodukte unmittelbar aufzunehmen, also mit den Liquidaprodukten befüllt zu werden.

Folglich ist die Verpackungsmaschine dazu eingerichtet, entsprechende einnehmbare Produkte in den Behälter zu verpacken, insbesondere die einnehmbaren Produkte direkt in die Behälter zu füllen und die Behälter zu verschließen.

Die Sensoren können induktive Sensoren zum Erkennen metallischer Fremdkörper sein und beispielsweise als Ringsensoren ausgebildet sein. Solche Sensoren sind kostengünstig. Dies wirkt sich entsprechend positiv auf die Kosten der Prüfvorrichtung bzw. der Verpackungsmaschine aus. Außerdem lassen sich diese Sensoren einfach in die Prüfvorrichtung bzw. die Verpackungsmaschine integrieren und weisen eine ausreichend hohe Sensibilität und Auflösung auf, um auch kleine metallische Fremdkörper zuverlässig zu erkennen.

Vorzugsweise sind die Sensoren dazu eingerichtet, metallische Fremdkörper zu erkennen, die eine Größe zwischen 0,5 und 25 mm, mehr bevorzugt zwischen 1,0 und 2,0 mm aufweisen. Die Größe kann dabei einem Durchmesser im Wesentlichen kugelförmiger Fremdkörper oder einer Kantenlänge im Wesentlichen quaderförmiger Fremdkörper entsprechen.

Die Sensoren sind besonders bevorzugt dazu eingerichtet, Fremdkörper zu erkennen, die aus einem der folgenden Materialien oder einer Kombination daraus gebildet sind: Eisen, Edelstahl, Aluminium, Messing, Buntmetalle.

Bevorzugt ist die Sensibilität bzw. Empfindlichkeit dieser Mehrzahl von Sensoren einstellbar.

Auf diese Weise kann die Empfindlichkeit der Sensoren in Abhängigkeit der Produkte angepasst werden. Insbesondere kann die Empfindlichkeit der Sensoren in Abhängigkeit einer Beschaffenheit, wie zum Beispiel einem Feuchtigkeits- oder Metallgehalt, der Produkte einstellbar sein. So kann vermieden werden, dass Behälter ohne Fremdkörper aufgrund der Beschaffenheit der Produkte fälschlicherweise als fehlerhaft erkannt und ausgeschieden werden.

In einer Ausführungsform umfasst jeder der Sensoren ein erstes Potentiometer und ein zweites Potentiometer. Das erste Potentiometer ist dazu eingerichtet, Fremdkörper, insbesondere metallische Fremdkörper, im zu prüfenden Behälter zu detektieren. Das zweite Potentiometer ist dazu eingerichtet, das tatsächliche Potenzial zu erfassen und an eine Steuereinrichtung der Prüfvorrichtung bzw. der Verpackungsmaschine zu übermitteln.

Ein weiterer Vorteil der Sensoren ist, dass jeder der Sensoren nur einen geringen metallfreien Bereich um den jeweiligen Sensor herum erfordert, der zur Vermeidung von Störungen des jeweiligen Sensors keine metallischen Gegenstände aufweisen sollte. Vorzugsweise ist der metallfreie Bereich definiert durch einen ersten Abstand zu den Sensoren parallel zur Förderebene und einen zweiten Abstand zu den Sensoren senkrecht zur Förderebene. Der erste Abstand beträgt vorzugsweise zwischen 0 mm und 100 mm, mehr bevorzugt zwischen 0 mm und 75 mm und noch mehr bevorzugt zwischen 0 mm und 50 mm. Der zweite Abstand beträgt vorzugsweise zwischen 0 mm und 200 mm, mehr bevorzugt zwischen 0 mm und 150 mm und noch mehr bevorzugt zwischen 0 mm und 110 mm. Als Extremwerte des ersten und des zweiten Abstands sind die angegebenen Grenzwerte der Bereiche auch separat von dieser Offenbarung umfasst. Ebenso sollen alle Zwischenwerte der angegebenen Bereiche, insbesondere in ganzen Millimetern, vom Offenbarungsgehalt umfasst sein.

Die Förderrichtung ist parallel zur Förderebene ausgerichtet. Unabhängig davon und unabhängig voneinander verlaufen die Förderrichtung und die Förderebene vorzugsweise jeweils im Wesentlichen horizontal. Die Bewegungsrichtung ist dann im Wesentlichen vertikal ausgerichtet.

Die Förderebene kann durch eine Fläche definiert sein, auf der die Mehrzahl von Behältern in Förderrichtung gefördert wird. Zum Beispiel ist die Fläche eine Oberfläche eines Fördertischs oder eines Förderbands. Die Fördereinrichtung kann die Mehrzahl von Behältern zum Beispiel auf dem Fördertisch durch die Prüfvorrichtung bewegen.

Um eine möglichst einfache Konstruktion der Prüfvorrichtung zu ermöglichen, ist die Relativbewegung zwischen den Sensoren und den Trägerelementen bzw. den zu prüfenden Behältern zwischen der ersten Anordnung und der zweiten Anordnung ausschließlich in Bewegungsrichtung gerichtet. Die Relativbewegung zwischen der ersten und der zweiten Anordnung ist nicht in eine von der Bewegungsrichtung abweichende Richtung gerichtet. Insbesondere erfolgt zwischen der ersten und der zweiten Anordnung keine Relativbewegung zwischen den Sensoren und den Trägerelementen bzw. den zu prüfenden Behältern in Förderrichtung. Bei den Behältern der Mehrzahl von Behältern handelt es sich um Behälter, die mittels eines Deckels verschließbar sind, wie sie zur Aufnahme von einnehmbaren der hierin beschriebenen Art bekannt sind. Jeder Behälter weist einen Boden, eine umlaufende Wand und einen Hals auf. Der Hals bildet eine Öffnung des Behälters, durch die die Produkte in den Behälter gefüllt und aus dem Behälter entnommen werden können. Der Deckel ist vorzugsweise auf den Behälter gepresst oder geschraubt, wobei der Hals dann ein Gewinde aufweist, das mit einem Gewinde des Deckels eingreift. Der Deckel kann aber eine beliebige kraftschlüssige oder formschlüssige Verbindung zum Behälter, insbesondere zu dessen Hals aufweisen. Die Mehrzahl von Behältern kann aus Kunststoff oder Glas gebildet sein.

In allen hierin beschriebenen Ausführungsformen sind die Behälter der Mehrzahl von Behältern bevorzugt als Flaschen ausgebildet. Alle hierin beschriebenen Merkmale der Behälter treffen auch auf Flaschen zu. Der Begriff "Flasche" kann daher für diese bevorzugte Ausführungsform durchwegs synonym zu dem Begriff "Behälter" verwendet werden. Auch flaschenähnliche Behälter, wie Ampullen, Karpullen oder Vials sollen hierin unter den Oberbegriff Flaschen fallen. Dies gilt ebenso für verschließbare (Kunststoff-) Behälter bzw. Flaschen, wie sie z.B. aus dem Bereich von Lebensmitteln und Nahrungsergänzungsmitteln bekannt sind.

Jeder Behälter der Mehrzahl von Behältern ist vorzugsweise rotationssymmetrisch um eine Mittelachse ausgebildet. Die Mittelachse ist vorzugsweise zumindest im Prüfbereich senkrecht zur Förderebene und parallel zur Bewegungsrichtung ausgerichtet. Der zu prüfende Behälter kann im Prüfbereich mit dem Boden auf dem Trägerelement stehen.

Die Behälter der Mehrzahl von Behältern weisen vorzugsweise jeweils einen Durchmesser auf, der zwischen 20 mm und 1000 mm, mehr bevorzugt zwischen 25 mm und 77 mm beträgt.

Eine Höhe der Behälter der Mehrzahl von Behältern beträgt vorzugsweise zwischen 40 mm und 200 mm.

In einer bevorzugten Ausführungsform sind die Sensoren ringförmig ausgebildet, zum Beispiel als (induktiver) Ringsensor bzw. Ringdetektor, wie bereits beschrieben.

Die ringförmigen Sensoren weisen jeweils eine Öffnung auf, in die der zu prüfende Behälter einführbar ist und die vorzugsweise eine Durchgangsöffnung bildet. Ein Innenumfang des jeweiligen Sensors entspricht einem Innenumfang der Öffnung und kann an die Form der zu prüfenden Behälter angepasst sein. Bevorzugt sind der Innenumfang des jeweiligen Sensors, Innenumfang der Öffnung sowie die zu prüfenden Behälter im Wesentlichen zylindrisch ausgebildet. Jeder der ringförmigen Sensoren weist dann die Form eines Kreisrings auf. Es sind jedoch auch andere Geometrien möglich.

Ein Innendurchmesser des jeweiligen ringförmigen Sensors entspricht dem Durchmesser der Öffnung und ist größer als der Durchmesser der Mehrzahl von Behältern. Vorzugsweise beträgt der Innendurchmesser des jeweiligen Sensors bzw. der Durchmesser der Öffnung zwischen 20 mm und 100 mm.

Eine Höhe des jeweiligen Sensors entspricht bei einer Durchgangsöffnung im Wesentlichen einer Tiefe der Öffnung in axialer Richtung der Öffnung. Die Höhe des jeweiligen Sensors bzw. die Tiefe der Öffnung kann kleiner als die Höhe der Mehrzahl von Behältern sein. Die Sensoren erkennen einen Fremdkörper dann während der Relativbewegung zwischen den Sensoren und den zu prüfenden Behältern.

Eine besonders zuverlässige Erkennung von Fremdkörpern kann ermöglicht werden, wenn die Mehrzahl von Sensoren die zu prüfenden Behälter in der zweiten Anordnung in Umfangsrichtung des zu prüfenden Behälters vollständig umgibt. Vorzugsweise umgibt jeweils ein Sensor genau einen Behälter. Dies ist besonders einfach mit dem bereits beschriebenen ringförmigen Sensor möglich, kann aber auch mit anderen Sensoren verwirklicht werden.

Es ist weiterhin bevorzugt, dass die Prüfvorrichtung einen Aktor umfasst, der dazu ausgebildet ist, die Relativbewegung zwischen den Sensoren und den Trägerelementen zu erzeugen. Besonders bevorzugt ist der Aktor mit den Trägerelementen verbunden und dazu ausgebildet, das die Trägerelemente parallel zur Bewegungsrichtung zu bewegen. Der Aktor kann als elektrischer, elektromagnetischer, hydraulischer, pneumatischer oder mechanischer Aktor ausgebildet sein.

Die Trägerelemente können in einer Ausführungsform jeweils einen Greifer aufweisen, der dazu eingerichtet ist, den zu prüfenden Behälter zu erfassen und relativ zu dem jeweiligen Sensor zu bewegen. Der Greifer kann den zu prüfenden Behälter von oben, von unten oder von der Seite an der umlaufenden Wand erfassen. Alternativ kann der Greifer den zu prüfenden Behälter von oben oder von der Seite am Hals oder am Deckel erfassen, sofern dieser bereits aufgebrachten ist.

In einer besonders bevorzugten Ausführungsform ist jeweils ein zu prüfender Behälter im Prüfbereich auf einem Trägerelement angeordnet. Jedes der Trägerelemente ist dann derart ausgebildet, dass es den zu prüfenden Behälter im Prüfbereich von unten stützt und dass es in Bewegungsrichtung bewegbar ist. Die Trägerelemente können in diesem Fall besonders einfach ausgebildet und gelagert sein. Die Sensoren sind dann vorzugsweise stationär angeordnet, um einen einfachen und kostengünstigen Aufbau der Prüfvorrichtung zu ermöglichen. Die Sensoren können aber auch bewegbar sein.

Vorzugsweise liegt eine Kontaktfläche der Trägerelemente, auf der die zu prüfende Behälter angeordnet sind in der ersten Anordnung in der Förderebene und in der zweiten Anordnung nicht in der Förderebene. Die Behälter können z.B. mittels ihres Bodens auf der Kontaktfläche stehen. Auf diese Weise können die zu prüfenden Behälter möglichst einfach mittels der Fördereinrichtung auf dem jeweiligen Trägerelement platziert werden, um dann mittels der Trägerelemente den Sensoren zugeführt zu werden. Die Kontaktfläche ist bevorzugt parallel zur Förderebene ausgerichtet, insbesondere sowohl in der ersten als auch in der zweiten Anordnung sowie vorzugsweise in allen Positionen zwischen der ersten und der zweiten Anordnung.

Die Trägerelemente können eine Saugeinrichtung zum Halten des Behälters auf der Kontaktfläche umfassen. Hierzu kann die Kontaktfläche zumindest eine Öffnung aufweisen, die in Fluidverbindung mit einer Unterdruckquellee Zum Beispiel weist der Fördertisch Öffnungen auf, in welche die Trägerelemente in der ersten Anordnung angeordnet sind. Eine innere Umfangsform der jeweiligen Öffnung korrespondiert dann mit einem Außenumfang des jeweiligen Trägerelements. können Behälter einfach auf dem jeweiligen Trägerelement angeordnet und aus der ersten in die zweite Anordnung bewegt werden.

Sind die Mehrzahl von Trägerelementen in Bewegungsrichtung beweglich ausgebildet, können

in einer ersten Ausführungsform die Sensoren unterhalb der Förderebene angeordnet sein und die Trägerelemente können bezüglich der Förderebene absenkbar sein. In einer zweiten Ausführungsform sind die Sensoren oberhalb der Förderebene angeordnet und die Trägerelemente sind bezüglich der Förderebene anhebbar.

In der ersten Ausführungsform können die Trägerelemente zum Beispiel mittels eines Vorspannelements, wie einer Feder, gelagert und vorzugsweise in eine Position vorgespannt sein, in der die Kontaktfläche in der Förderebene liegt. Der Aktor ist dann bevorzugt derart angeordnet und ausgebildet, dass er zum Beispiel mittels eines Stempels entgegen einer Vorspannkraft des Vorspannelements auf die Trägerelemente oder auf den zu prüfenden Behälter einwirkt. Hierzu kann das Vorspannelement unterhalb der Trägerelemente angeordnet und mit diesen verbunden sein und der Aktor mit dem Stempel ist oberhalb der Trägerelemente und dem zu prüfenden Behälter angeordnet. Der Aktor kann den Behälter und die Trägerelemente mittels des Stempels in Bewegungsrichtung in die zweite Anordnung bewegen, insbesondere nach unten drücken.

Alternativ kann der Aktor fest mit der Mehrzahl von Trägerelementen verbunden sein, sodass eine Stellbewegung des Aktor direkt auf die Trägerelemente übertragen wird. Zum Beispiel ist der Aktor unterhalb der Trägerelemente angeordnet und dazu eingerichtet, die Trägerelemente parallel zur Bewegungsrichtung nach oben und nach unten zu bewegen. Auf diese Weise lässt sich auch die zweite Ausführungsform realisieren.

In einem Ausführungsbeispiel sind die Trägerelemente an einer Linearführung beweglich gelagert, die sich parallel zur Bewegungsrichtung erstreckt.

Die Trägerelemente sind dann mittels des Aktors entlang der Linearführung bewegbar. Zum Beispiel ist der Aktor als Servomotor ausgebildet und treibt die Trägerelemente oder ein Verbindungselement, das die Trägerelemente mit der Linearführung koppelt, mittels eines Riemenantriebs an. Dies hat den Vorteil, dass die Beschleunigung der Trägerelemente mittels des Servomotors präzise einstellbar ist, wodurch beispielsweise bei noch offenen Behältern vermieden wird, dass Produkte aus den Behältern fallen. Es ist aber auch denkbar, die Trägerelemente mittels eines Spindelantriebs, eines hydraulischen oder pneumatischen Zylinderantriebs oder alternativer Antriebe zu bewegen.

Sowohl bei der ersten als auch bei der zweiten Ausführungsform sind die Sensoren Ce_{P'1aer} bevorzugt ortsfest angebracht, zum Beispiel an einem Gestell oder Gehäuse der Prüfvorrichtung oder der Verpackungsmaschine.

Alternativ können die Sensoren bewegbar sein. In diesem Fall ist es bevorzugt, dass die Trägerelemente stationär ausgebildet ist, wodurch ein einfacher Aufbau der Prüfvorrichtung möglich ist. Zum Beispiel sind die Trägerelemente durch den Fördertisch gebildet, dessen Oberfläche die Förderebene definiert. Die Sensoren können oberhalb der Förderebene angeordnet und parallel zur Bewegungsrichtung absenkbar sein.

Um die Effizienz der Prüfvorrichtung zu erhöhen, umfasst die Prüfvorrichtung erfindungsgemäß eine Mehrzahl von Sensoren und eine Mehrzahl von Trägerelementen. Bevorzugt ist jeder Sensor der Mehrzahl von Sensoren dazu eingerichtet, Fremdkörper in genau einem Behälter zu diktieren. Jedes Trägerelement der Mehrzahl von Trägerelementen nimmt vorzugsweise genau einen Behälter der Mehrzahl von Behältern auf. Folglich ist bevorzugt jedem Sensor ein Trägerelement zugeordnet.

Zum Beispiel umfasst die Prüfvorrichtung zumindest einen weiteren Sensor, der in einem weiteren Prüfbereich der Prüfvorrichtung angeordnet und zum Detektieren von Fremdkörpern, insbesondere von metallischen Fremdkörpern, in einem weiteren zu prüfenden Behälter der Mehrzahl von Behältern eingerichtet ist. Der zumindest eine weitere Sensor und/oder zumindest ein weiteres Trägerelement der Prüfvorrichtung, von dem der weitere zu prüfende Behälter im weiteren Prüfbereich aufgenommen ist, sind derart beweglich ausgebildet, dass eine Relativbewegung zwischen dem zumindest einen weiteren Sensor und dem weiteren zu prüfenden Behälter in der Bewegungsrichtung zwischen einer ersten Anordnung und einer zweiten Anordnung erzeugbar ist. In der ersten Anordnung ist der zumindest eine weitere Sensor in der Bewegungsrichtung beabstandet zum weiteren zu prüfenden Behälter angeordnet und in der zweiten Anordnung umgibt der zumindest eine weitere Sensor den weiteren zu prüfenden Behälter zumindest teilweise. Folglich umfasst die Prüfvorrichtung die Mehrzahl von Sensoren, die mindestens den Sensor und den zumindest einen weiteren Sensor umfasst, zum Prüfen einer Mehrzahl von zu prüfenden Behältern, die mindestens den zu prüfenden Behälter und zumindest einen weiteren zu prüfenden Behälter umfasst.

Erfindungsgemäß ist die Mehrzahl von Sensoren in Förderrichtung hintereinander angeordnet. Vorzugsweise ist die Mehrzahl von Trägerelementen in Förderrichtung hintereinander angeordnet. So kann jedem Sensor ein Trägerelement zugeordnet sein.

Die Mehrzahl von Behältern kann in einer Reihe durch die Prüfvorrichtung, insbesondere durch die gesamte Verpackungsmaschine, gefördert werden, wobei die Reihe parallel zur Förderrichtung angeordnet ist. Es ist auch denkbar, dass die Mehrzahl von Behältern in mehreren parallelen Reihen durch die Prüfvorrichtung bzw. die Verpackungsmaschine bewegt werden.

Die Mehrzahl von Sensoren kann dann dazu eingerichtet sein, die Mehrzahl von zu prüfenden Behältern der Mehrzahl von Behältern gleichzeitig zu prüfen. Hierzu kann die Mehrzahl von Sensoren und/oder die Mehrzahl von Trägerelementen derart beweglich ausgebildet sein, dass die Relativbewegung zwischen der Mehrzahl von Sensoren und den zu prüfenden Behältern synchron erfolgt.

In einer besonders bevorzugten Ausführungsform sind die Trägerelemente der Mehrzahl von Trägerelementen bezüglich der Förderebene absenkbar. Die Trägerelemente der Mehrzahl von Trägerelementen können derart miteinander verbunden sein, dass sie synchron bewegbar sind. Die Mehrzahl von Sensoren ist in diesem Fall unter der Förderebene angeordnet, vorzugsweise stationär.

Es müssen nicht alle Trägerelemente der Mehrzahl von Trägerelementen synchron miteinander bewegbar bzw. miteinander verbunden sein. Es ist auch denkbar, dass jeweils eine Gruppe Trägerelementen aus der Mehrzahl von Trägerelementen, die nicht alle Trägerelemente umfasst, synchron bewegbar und bevorzugt miteinander verbunden ist.

Beispielsweise ist eine Gruppe von Trägerelementen auf einem gemeinsamen Verbindungselement angebracht. Das Verbindungselement kann zudem die Gruppe von Trägerelementen mit der Linearführung verbinden, wie oben beschrieben. Analog kann auch die gesamte Mehrzahl von Trägerelementen auf einem gemeinsamen Verbindungselement angebracht sein.

Um zu vermeiden, dass sich Sensoren gegenseitig beeinflussen ist es weiterhin bevorzugt, dass zumindest zwei Sensoren der Mehrzahl von Sensoren mit einer unterschiedlichen Frequenz betreibbar sind. Genauer ist ein erster Sensor der Mehrzahl von Sensoren mit einer ersten Frequenz betreibbar und ein zweiter Sensor der Mehrzahl von Sensoren mit einer zweiten Frequenz betreibbar, die sich von der ersten Frequenz unterscheidet. Die Frequenz jedes Sensors ist vorzugsweise vordefinierten, sodass sie von einem Bediener der Verpackungsmaschine nicht geändert werden kann. Insbesondere können zwei Sensoren der Mehrzahl von Sensoren mit einer unterschiedlichen Frequenz betreibbar sein, die in Förderrichtung nebeneinander angeordnet sind.

Alle zum Sensor, zu dem zu prüfenden Behälter und zu dem Trägerelement beschriebenen Merkmale treffen analog auf den zumindest einen weiteren Sensor, den zumindest einen weiteren zu prüfenden Behälter und das zumindest eine weitere Trägerelement und somit auf alle hierin beschriebenen Sensoren, zu prüfenden Behälter und Trägerelemente zu. Aus Gründen der einfacheren Bezugnahme und eindeutigeren Beschreibung wird hierin unabhängig von der tatsächlichen Anzahl an Sensoren der Sensor auch als erster Sensor, der zu prüfende Behälter auch als erster Behälter, das Trägerelement auch als erstes Trägerelement bezeichnet. Bei der Mehrzahl von Sensoren wird der weitere Sensor auch als zweiter Sensor, der weitere zu prüfende Behälter auch als zweiter Behälter und das weitere Trägerelement auch als zweites Trägerelement bezeichnet. Analog kann die Prüfvorrichtung zumindest einen dritten Sensor, zumindest einen dritten zu prüfenden Behälter und zumindest ein drittes Trägerelement oder jeweils weitere umfassen.

Bevorzugt erfolgt die Relativbewegung zwischen der Mehrzahl von Sensoren und dem jeweiligen Behälter der Mehrzahl von zu prüfenden Behältern zwischen der jeweiligen ersten Anordnung und der jeweiligen zweiten Anordnung parallel und zeitgleich. D. h., dass die Bewegungsrichtung jedes Paares aus einem Sensor der Mehrzahl von Sensoren und dem entsprechenden zu prüfenden Behälter der Mehrzahl von zu prüfenden Behältern parallel zur Bewegungsrichtung des ersten Sensors und des ersten Behälters ausgerichtet ist.

Eine erfindungsgemäße Verpackungsmaschine zum Verpacken von einnehmbaren Produkten, insbesondere von medizinischen oder pharmazeutischen Produkten oder Nahrungs- oder Nahrungsergänzungsmitteln, in Behälter ist in Anspruch 8 definiert.

Auf diese Art und Weise wird eine Verpackungsmaschine bereitgestellt, mittels derer getaktet geförderte Behälter während des Verpackungsprozesses einfach auf Fremdkörper und vor allem auf metallische Fremdkörper geprüft werden können.

Die Verpackungsmaschine kann weiterhin eine Trockenmittelzuführung, die zum Zuführen von Trockenmittel in die Mehrzahl von Behältern eingerichtet ist, und unabhängig davon eine Wattebauschzuführung (auch als Cottoner bezeichnet), die zum Zuführen von Wattebauschen in die Mehrzahl von Behältern eingerichtet ist, umfassen.

Die Zuführeinheit ist vor der Fülleinheit angeordnet und die Verschließeinheit ist nach der Fülleinheit angeordnet. Falls vorhanden, ist die Trockenmittelzuführung bevorzugt zwischen der Zuführeinheit und der Fülleinheit angeordnet. Die Wattebauschzuführung ist, falls vorhanden, bevorzugt zwischen der Fülleinheit und der Verschließeinheit angeordnet.

Ein möglichst einfacher und kompakter Aufbau der Verpackungsmaschine wird dadurch ermöglicht, dass die Mehrzahl von Behältern in der Verpackungsmaschine, insbesondere zwischen der Zuführeinheit, der Fülleinheit und der Verschließeinheit und vorzugsweise in der gesamten Verpackungsmaschine, in der Förderebene und in der Förderrichtung bewegt wird.

Die Fördereinrichtung der Prüfvorrichtung ist bevorzugt dazu eingerichtet, die Mehrzahl von Behältern getaktet durch die Fülleinheit, die Verschließeinheit und die Prüfvorrichtung und ggf. durch die gesamte Verpackungsmaschine zu fördern. Die Fördereinrichtung kann eine Mehrzahl von Förderelementen umfassen, die vorzugsweise synchron zueinander bewegbar sind.

Die Verpackungsmaschine kann als Flaschenlinie ausgebildet sein, in die alle erforderlichen Einheiten, Zuführungen und (Prüf-) Vorrichtungen integriert sind. Die Behälter der Mehrzahl von Behältern sind dann als Flaschen ausgebildet, wie bereits beschrieben.

Der Fördertisch kann sich durch die gesamte Verpackungsmaschine erstrecken, sodass die Mehrzahl von Behältern bzw. Flaschen auf dem Fördertisch durch zumindest die hierin beschriebenen Einheiten, Zuführungen und (Prüf-) Vorrichtungen und vorzugsweise durch alle Einheiten, Zuführungen und (Prüf-) Vorrichtungen der Flaschenlinie gefördert werden.

Grundsätzlich kann die Prüfvorrichtung in zumindest eine aus der Zuführ-, Füll- oder Verschließeinheit oder in zumindest eine aus der Trockenmittel- oder der Wattebauschzuführung der Verpackungsmaschine integriert sein. Alternativ kann die Prüfvorrichtung einer aus der Zuführ-, Füll- oder Verschließeinheit oder der Trockenmittel- oder der Wattebauschzuführung in Förderrichtung nachgeschaltet sein. In diesem Fall bildet die Prüfvorrichtung ein selbstständiges Modul der Verpackungsmaschine.

Es ist auch denkbar, dass die Verpackungsmaschine eine Mehrzahl von Prüfvorrichtungen umfasst, wobei jede Prüfvorrichtung der Mehrzahl von Prüfvorrichtungen gemäß einer der vorbeschriebenen Varianten ausgebildet bzw. angeordnet sein kann.

Ein besonders platzsparender Aufbau der Verpackungsmaschine wird ermöglicht, wenn die Prüfvorrichtung in die Fülleinheit oder die Verschließeinheit integriert ist. Falls vorhanden, kann die Prüfvorrichtung auch in die Wattebauschzuführung integriert sein.

Eine in die Verschließeinheit integrierte Prüfvorrichtung bietet ebenso wie eine der Verschließeinheit nachgeordnete Prüfvorrichtung den Vorteil, dass die Behälter unmittelbar nach dem Prüfen verschlossen werden oder zum Prüfen bereits verschlossen sind. Das Risiko der Kontamination des Behälterinhalts mit Fremdkörpern nach dem Prüfen wird dadurch minimiert bzw. eliminiert.

Die Integration der Prüfvorrichtung in die Fülleinheit oder die Verschließeinheit kann beispielsweise wie folgt umgesetzt werden.

In einer bevorzugten Ausführungsform umfasst die Fülleinheit eine Mehrzahl von Fülleinrichtungen, die jeweils zum Befüllen eines Behälters der Mehrzahl von Behältern eingerichtet sind und die in Förderrichtung beabstandet zueinander angeordnet sind. Jeder Sensor der Prüfvorrichtung ist dann in Förderrichtung zwischen zwei benachbarten Fülleinrichtungen der Mehrzahl von Fülleinrichtungen angeordnet. Die Prüfvorrichtung umfasst eine Mehrzahl von Sensoren, jeder Sensor ist einer Fülleinrichtung der Mehrzahl von Fülleinrichtungen nachgeschaltet. Alternativ kann jeder Sensor der Mehrzahl von Sensoren einer Fülleinrichtung vorgeschaltet sein.

Zusätzlich oder alternativ umfasst die Verschließeinheit eine Mehrzahl von Verschließeinrichtungen, die jeweils zum Verschließen eines Behälters der Mehrzahl von Behältern eingerichtet sind und die in Förderrichtung beabstandet zueinander angeordnet sind. Jeder Sensor der Prüfvorrichtung ist dann in Förderrichtung zwischen zwei benachbarten Verschließeinrichtungen der Mehrzahl von Verschließeinrichtungen angeordnet. Die Prüfvorrichtung umfasst eine Mehrzahl von Sensoren, jeder Sensor ist einer Verschließeinrichtung der Mehrzahl von Verschließeinrichtungen nachgeschaltet. Alternativ kann jeder Sensor der Mehrzahl von Sensoren einer Verschließeinrichtung vorgeschaltet sein.

Zusätzlich oder alternativ umfasst die Wattebauschzuführung eine Mehrzahl von Zuführeinrichtungen, die jeweils zum Zuführen eines Wattebauschs in einen Behälter der Mehrzahl von Behältern eingerichtet sind und die in Förderrichtung beabstandet zueinander angeordnet sind. Jeder Sensor der Prüfvorrichtung ist dann in Förderrichtung zwischen zwei benachbarten Zuführeinrichtungen der Mehrzahl von Zuführeinrichtungen angeordnet. Die Prüfvorrichtung umfasst eine Mehrzahl von Sensoren, jeder Sensor ist Zuführeinrichtung der Mehrzahl von Zuführeinrichtungen nachgeschaltet. Alternativ kann jeder Sensor der Mehrzahl von Sensoren einer Zuführeinrichtung vorgeschaltet sein. Dies kann analog auch für die Trockenmittelzuführung gelten.

Wie bereits erwähnt, kann die Prüfvorrichtung alternativ im Wesentlichen unabhängig von den weiteren Einheiten bzw. Zuführungen der Verpackungsmaschine ausgebildet sein und beispielsweise ein eigenständiges Modul der Verpackungsmaschine bilden. Dadurch wird die Flexibilität der Anordnung der Prüfvorrichtung innerhalb der Verpackungsmaschine erhöht und es kann eine geringere Variantenvielfalt der Einheiten bzw. Zuführungen erreicht werden, die wiederum eine Kostensenkung ermöglicht.

Die Prüfvorrichtung kann zum Beispiel zwischen der Fülleinheit und der Verschließeinheit oder, falls vorhanden, zwischen der Wattebauschzuführung und der Verschließeinheit angeordnet sein. Besonders bevorzugt ist die Prüfvorrichtung vor der Verschließeinheit, insbesondere zwischen der Fülleinheit und der Verschließeinheit angeordnet.

In einer Ausführungsform kann die Prüfvorrichtung in Förderrichtung hinter der Verschließeinheit angeordnet sein, also der Verschließeinheit nachgeschaltet sein. Dadurch wird sichergestellt, dass bereits geprüfte Behälter keine Fremdkörper mehr aufnehmen können, da sie zum Zeitpunkt der Prüfung bereits verschlossen sind.

Ein erfindungsgemäßes Verfahren zum Prüfen von Behältern für einnehmbare Produkte, insbesondere für medizinische oder pharmazeutische Produkte oder Nahrungs- oder Nahrungsergänzungsmittel ist in Anspruch 11 definiert.

Auf diese Art und Weise wird ein Verfahren bereitgestellt, mit dem getaktet geförderte Behälter in einer Verpackungsmaschine, wie zum Beispiel einer Flaschenlinie, einfach auf Fremdkörper und vor allem auf metallische Fremdkörper geprüft werden können.

Sofern nicht anders beschrieben, werden alle hierin angegebenen Schritte des Verfahrens vorzugsweise in der angegebenen Reihenfolge ausgeführt.

Das erfindungsgemäße Verfahren wird mittels der erfindungsgemäßen Prüfvorrichtung durchgeführt. Alle zur erfindungsgemäßen Prüfvorrichtung beschriebenen Merkmale sind daher analog auf das erfindungsgemäße Verfahren übertragbar und umgekehrt.

Die Schritte b) bis f) werden jeweils für die Mehrzahl von Behältern, durchgeführt. Durch das Prüfen des jeweils zu prüfenden Behälters gemäß Schritt d) wird der zu prüfende Behälter zum geprüften Behälter, es handelt sich jedoch noch um denselben Behälter.

Vorzugsweise umfasst das Verfahren das Wiederholen der Schritte b) bis f) für weitere zu prüfende Behälter der Mehrzahl von Behältern.

Es ist eine Mehrzahl von Sensoren vorgesehen, das Verfahren umfasst das Durchführen der Schritte b) bis f) zeitgleich für mehrere zu prüfende Behälter der Mehrzahl von Behältern.

Zum Beispiel können die Schritte b) bis f) zeitgleich für den ersten, den zweiten und den dritten Behälter durchgeführt werden.

Schritt d) kann erfolgen, wenn die Sensoren und die zu prüfenden Behälter in der zweiten Anordnung angeordnet sind und/oder während der ersten Relativbewegung gemäß Schritt c) und/oder während der zweiten Relativbewegung gemäß Schritt e).

Das Erzeugen der ersten Relativbewegung gemäß Schritt c) umfasst bevorzugt das Absenken des zu prüfenden Behälters bezüglich der Förderebene, wobei der zumindest eine Sensor unterhalb der Förderebene angeordnet ist. Alternativ umfasst das Erzeugen der ersten Relativbewegung gemäß Schritt c) das Anheben der zu prüfenden Behälters bezüglich der Förderebene, wobei die Sensoren oberhalb der Förderebene angeordnet ist. In beiden Fällen können die Sensoren stationär angeordnet sein, um einen einfachen Aufbau der Prüfvorrichtung zu ermöglichen. Das Absenken oder Anheben der zu prüfenden Behälters, zum Beispiel mittels der Trägerelemente der Prüfvorrichtung, lässt sich besonders einfach realisieren.

Zusätzlich oder alternativ kann das Erzeugen der ersten Relativbewegung gemäß Schritt c) das Anheben oder das Absenken der Sensoren bezüglich der Förderebene umfassen, wobei das Absenken der Sensoren aufgrund der einfacheren Umsetzung bevorzugt ist. Die Sensoren sind dann oberhalb der Förderebene angeordnet. Der zu prüfende Behälter ist vorzugsweise stationär angeordnet.

Die zweite Relativbewegung erfolgt stets entgegengesetzt zur ersten Relativbewegung.

Die Schritte a), b) und f) werden bevorzugt mittels der Fördereinrichtung der Prüfvorrichtung ausgeführt. Die Schritte c) und e) werden bevorzugt durch die Mehrzahl von Sensoren und/oder die Mehrzahl von Trägerelementen der Prüfvorrichtung ausgeführt.

Das Verfahren kann weiterhin das Füllen der Mehrzahl von Behältern umfassen, das bevorzugt von der Fülleinheit der Verpackungsmaschine ausgeführt wird. Das Verfahren kann zudem das Verschließen der Mehrzahl von Behältern umfassen, das bevorzugt von der Verschließeinheit der Verpackungsmaschine ausgeführt wird. Gegebenenfalls kann das Verfahren das Zuführen eines Trockenmittels in jeden Behälter der Mehrzahl von Behältern vorzugsweise mittels der Trockenmittelzuführung und/oder das Zuführen eines Wattebauschs in jeden Behälter der Mehrzahl von Behältern vorzugsweise mittels der Wattebauschzuführung umfassen.

Die Schritte b) bis f) erfolgen vorzugsweise nach dem Füllen oder nach dem Verschließen des zu prüfenden Behälters.

Ist die Empfindlichkeit der Sensoren einstellbar, umfasst das Verfahren vorzugsweise weiterhin den Schritt:
Einstellen der Empfindlichkeit der Sensoren in Abhängigkeit der einnehmbaren Produkte, insbesondere in Abhängigkeit der Beschaffenheit der einnehmbaren Produkte.

Auf diese Weise wird verhindert, dass Behälter ohne Fremdkörper fälschlicherweise als fehlerhaft erkannt und ausgeschleust werden, wie bereits beschrieben.

Weitere Merkmale und Vorteile der vorliegenden Erfindung sind nachfolgend unter Bezugnahme auf die beigefügten Figuren beschrieben.
- Fig. 1: zeigt schematisch eine erfindungsgemäße Verpackungsmaschine mit einer erfindungsgemäßen Prüfvorrichtung gemäß einer ersten Ausführungsform.
- Fig. 2a, b: zeigen schematisch eine erfindungsgemäße Prüfvorrichtung gemäß einer zweiten Ausführungsform in einer ersten Anordnung und in einer zweiten Anordnung.
- Fig. 3a-c: zeigen schematisch verschiedene für das Verständnis der Erfindung nützliche Ausführungsformen
- Fig. 4: zeigt einen Ausschnitt der erfindungsgemäßen Prüfvorrichtung in einer perspektivischen Ansicht.

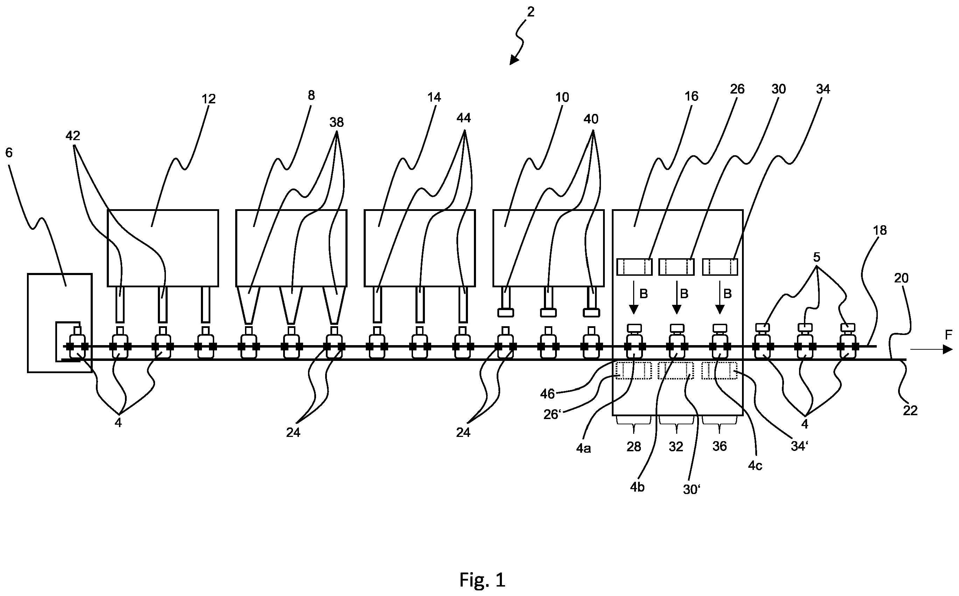

In Fig. 1 ist eine erfindungsgemäße Verpackungsmaschine 2 zum Verpacken von einnehmbaren Produkten (nicht dargestellt) in Behälter 4 schematisch in einer Seitenansicht dargestellt. Die Verpackungsmaschine 2 ist insbesondere als Flaschenlinie ausgebildet, die alle wesentlichen Einheiten, Zuführungen und Vorrichtungen zum Verpacken der einnehmbaren Produkte in die als Flaschen ausgebildeten Behälter 4 umfasst. Es versteht sich, dass die Erfindung jedoch nicht auf eine Flaschenlinie und als Flaschen ausgebildete Behälter 4 beschränkt ist, sondern allgemein auf Verpackungsmaschinen 2 für entsprechende Behälter 4 zutrifft.

Die Verpackungsmaschine 2 umfasst eine Zuführeinheit 6, die zum Zuführen einer Mehrzahl der Behälter 4 in die Verpackungsmaschine 2 eingerichtet ist, eine Fülleinheit 8, die zum Füllen der Mehrzahl von Behältern 4 mit den einnehmbaren Produkten eingerichtet ist, sowie eine Verschließeinheit 10, die zum Verschließen der Mehrzahl von Behältern 4 mit jeweils einem Deckel 5 eingerichtet ist. Optional umfasst die Verpackungsmaschine 2 zudem eine Trockenmittelzuführung 12, die zum Zuführen von Trockenmittel in die Mehrzahl von Behältern 4 eingerichtet ist, und eine Wattebauschzuführung 14, die zum Zuführen von Wattebauschen in die Mehrzahl von Behältern 4 eingerichtet ist. Schließlich umfasst die Verpackungsmaschine 2 noch eine Prüfvorrichtung 16, die zum Prüfen der Mehrzahl von Behältern 4 auf Fremdkörper, insbesondere auf metallische Fremdkörper, eingerichtet ist.

Die Prüfvorrichtung 16 umfasst eine Fördereinrichtung 18, die dazu eingerichtet ist, die Mehrzahl von Behältern 4 getaktet in einer Förderebene 20 in eine Förderrichtung F durch die Prüfvorrichtung 16 zu bewegen. Die Förderrichtung F erstreckt sich parallel zur Förderebene 20. Bevorzugt sind die Förderrichtung F und die Förderebene 20 horizontal ausgerichtet. Die Förderebene 20 kann beispielsweise durch eine Oberfläche eines Fördertischs 22 definiert sein, auf der die Mehrzahl von Behältern 4 durch die Prüfvorrichtung 16 gefördert werden.

Die Fördereinrichtung 18 erfasst jeden der Mehrzahl von Behältern 4 vorzugsweise formschlüssig, wie durch die Halteelemente 24 in Fig. 1 angedeutet. Beispielsweise handelt es sich bei der Fördereinrichtung 18 um eine Leiste, die sich im Wesentlichen parallel zur Förderrichtung F erstreckt und an der Vorsprünge als Halteelemente 24 angebracht oder ausgebildet sind. Eine solche Fördereinrichtung 18 wird auch als "Rechen" bezeichnet. Alternative geeignete Fördereinrichtungen sind dem Fachmann bekannt.

Die Zuführeinheit 6, die Fülleinheit 8 und die Verschließeinheit 10 sind in dieser Reihenfolge in Förderrichtung F hintereinander angeordnet, um zugeführte Behälter 4 zunächst zu befüllen und dann zu verschließen. Die Trockenmittelzuführung 12 ist bevorzugt in Förderrichtung F zwischen der Zuführeinheit 6 und der Fülleinheit 8 angeordnet und die Wattebauschzuführung 14 ist bevorzugt in Förderrichtung F zwischen der Fülleinheit 8 und der Verschließeinheit 10 angeordnet, sie können aber in Anpassung an die vorliegenden Anforderungen auch an anderer Stelle angeordnet sein. Ebenso ist es denkbar, dass die Verpackungsmaschine 2 weitere Einheiten bzw. Bearbeitungsstationen umfasst.

Es ist besonders vorteilhaft, wenn die Fördereinrichtung 18 derart ausgebildet ist, dass sie die Mehrzahl von Behältern 4 nicht nur durch die Prüfvorrichtung 16 sondern durch die Verpackungsmaschine 2, vorzugsweise durch die gesamte Verpackungsmaschine 2 fördert. In der dargestellten Ausführungsform wird die Mehrzahl von Behältern 4 mittels der Fördereinrichtung 18 von der Zuführeinheit 6 aus durch die Trockenmittelzuführung 12, die Fülleinheit 8, die Wattebauschzuführung 14, die Verschließeinheit 10 und die Prüfvorrichtung 16 in der Förderebene 20 in Förderrichtung F gefördert. Entsprechend kann sich der Fördertisch 22 durch die gesamte Verpackungsmaschine 2, also von der Zuführeinheit 6 bis zur Verschließeinheit 10 und zur Prüfvorrichtung 16, ggf. auch darüber hinaus erstrecken.

Ein besonders platzsparender Aufbau der Verpackungsmaschine 2 ergibt sich, wenn die Mehrzahl von Behältern 4 in der gesamten Verpackungsmaschine 2 in der Förderebene 20 in Förderrichtung F durch die Einheiten bzw. Vorrichtungen der Verpackungsmaschine 2 bewegt werden.

Die Prüfvorrichtung 16 ist in der dargestellten Ausführungsform in Förderrichtung F hinter der Verschließeinheit 10 angeordnet, also der Verschließeinheit 10 nachgeschaltet. Dies hat den Vorteil, dass bereits verschlossene Behälter 4 mittels der Prüfvorrichtung 16 geprüft werden. Eine Verunreinigung des Behälterinhalts der Behälter 4 durch Fremdkörper ist folglich nach dem Prüfen nicht mehr möglich. Die Prüfvorrichtung 16 kann in diesem Fall als eigenständiges Modul der Verpackungsmaschine 2 ausgebildet sein.

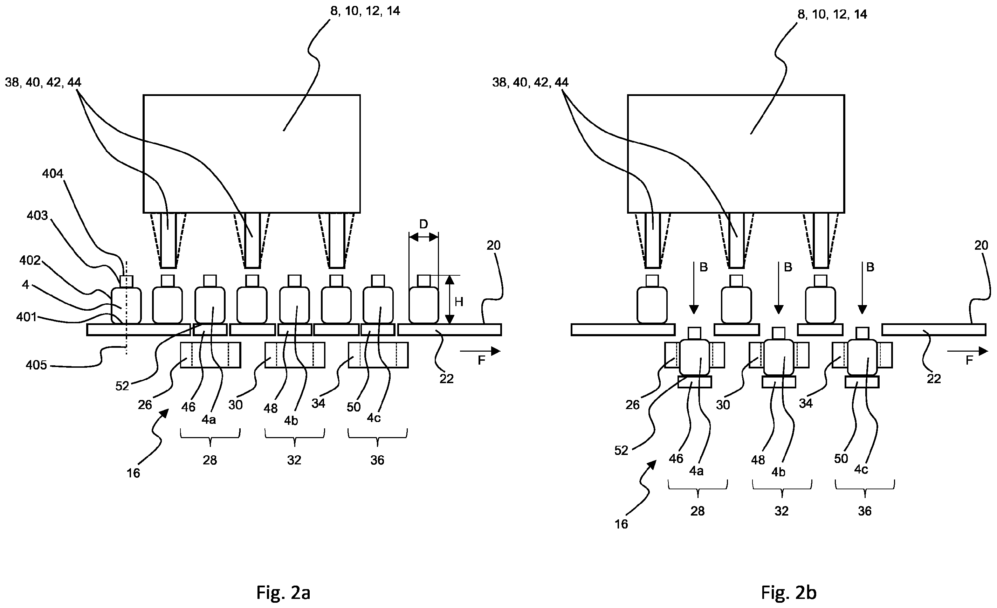

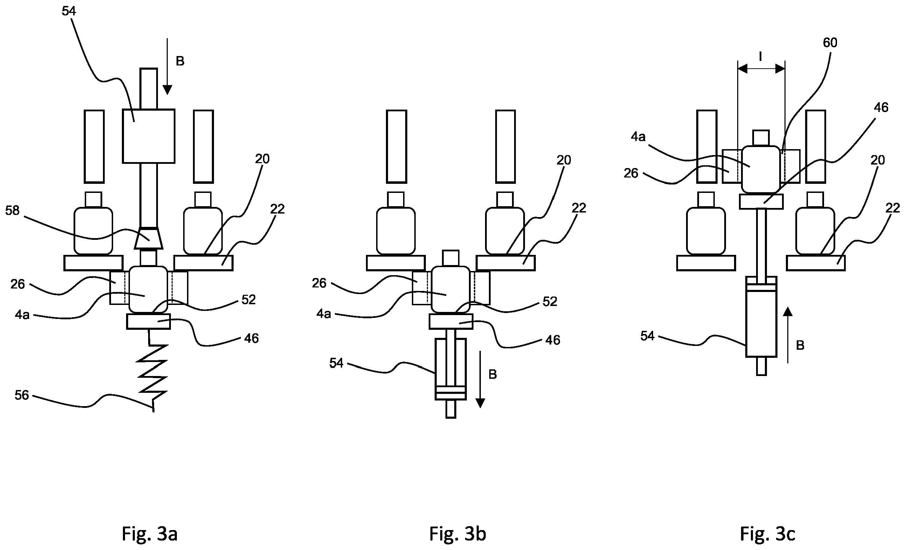

Die Prüfvorrichtung 16 kann auch an anderer Stelle in der Verpackungsmaschine 2 angeordnet sein, zum Beispiel in Förderrichtung F hinter der Fülleinheit 8 oder der Wattebauschzuführung 14 und somit zwischen der jeweiligen Einheit und der in Förderrichtung F folgenden Einheit. Ebenso kann die Verpackungsmaschine 2 eine Mehrzahl von Prüfvorrichtungen 16 an unterschiedlichen Stellen aufweisen. Die Fig. 2a-b und 3a-c zeigen weiterhin Ausführungsformen, bei denen die Prüfvorrichtung 16 in eine Einheit der Verpackungsmaschine 2, insbesondere in die Fülleinheit 8, die Wattebauschzuführung 14 oder die Verschließeinheit 10 integriert ist, wie unter Bezugnahme auf diese Figuren beschrieben.

Wie in Fig. 1 zu sehen, umfasst die Prüfvorrichtung 16 eine Mehrzahl von Sensoren, darunter Sensor 26, der in einem Prüfbereich 28 der Prüfvorrichtung 16 angeordnet und zum Detektieren von Fremdkörpern, insbesondere von metallischen Fremdkörpern in einem zu prüfenden Behälter 4a der Mehrzahl von Behältern 4 eingerichtet ist.

Die Prüfvorrichtung 16 umfasst eine Mehrzahl von Sensoren. Der Sensor 26 wird daher auch als erster Sensor 26, der Prüfbereich 28 auch als erster Prüfbereich 28 und der zu prüfende Behälter 4a auch als erster Behälter 4a bezeichnet. Weiterhin umfasst Mehrzahl von Sensoren neben dem ersten Sensor hier zumindest einen weiteren Sensor, wie zum Beispiel den zweiten Sensor 30, der in einem zweiten Prüfbereich 32 angeordnet und zum Detektieren von Fremdkörpern in einem zu prüfenden zweiten Behälter 4b eingerichtet ist, sowie einen dritten Sensor 34, der in einem dritten Prüfbereich 36 angeordnet und zum Detektieren von Fremdkörpern in einem zu prüfenden dritten Behälter 4c eingerichtet ist. Die Mehrzahl von Sensoren umfasst somit den ersten, den zweiten und den dritten Sensor 26, 30, 34. Die Mehrzahl von Sensoren 26, 30, 34 ist bevorzugt in Förderrichtung F hintereinander angeordnet. Die Mehrzahl von Sensoren 26, 30, 34 kann dazu eingerichtet sein, die zu prüfenden Behälter 4a, 4b, 4c, hier also den ersten, den zweiten und den dritten Behälter 4a, 4b, 4c gleichzeitig zu prüfen.

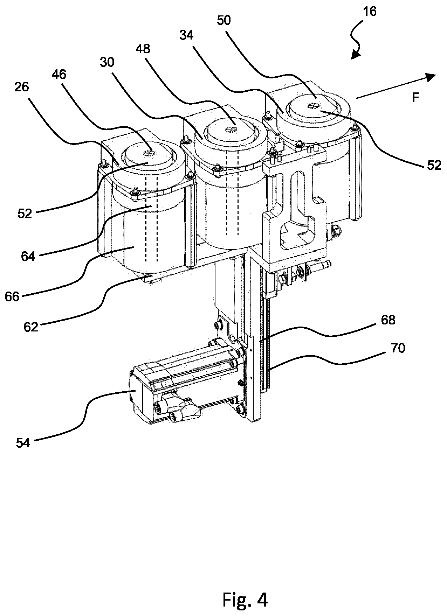

Die Mehrzahl von Sensoren 26, 30, 34 kann oberhalb der Förderebene 20 angeordnet sein. Bevorzugt ist die Mehrzahl von Sensoren 26, 30, 34 unterhalb der Förderebene 20 angeordnet, wie in Fig. 1 gestrichelt für den ersten, den zweiten und den dritten Sensor 26', 30', 34' angedeutet und in Fig. 4 detaillierter dargestellt.

In Fig. 1 ist ferner zu erkennen, dass die Einheiten 8, 10 und Zuführungen 12, 14 sowie die Prüfvorrichtung 16 der Verpackungsmaschine 2 bevorzugt zum Befüllen, Verschließen und Prüfen jeweils mehrerer Behälter 4 der Mehrzahl von Behältern 4 ausgebildet sind, um die Effizienz der Verpackungsmaschine 2 zu erhöhen.

Zum Beispiel umfasst die Fülleinheit 8 eine Mehrzahl von Fülleinrichtungen 38, die jeweils zum Befüllen eines Behälters 4 der Mehrzahl von Behältern eingerichtet sind und die in Förderrichtung F beabstandet zueinander angeordnet sind. Die Verschließeinheit 10 kann eine Mehrzahl von Verschließeinrichtungen 40 umfassen, die jeweils zum Verschließen eines Behälters 4 der Mehrzahl von Behältern 4 eingerichtet sind und die in Förderrichtung F beabstandet zueinander angeordnet sind. Falls vorhanden, kann die Trockenmittelzuführung 12 eine Mehrzahl von ersten Zuführeinrichtungen 42 umfassen und die Wattebauschzuführung 14 eine Mehrzahl von zweiten Zuführeinrichtungen 44 umfassen, wobei die Mehrzahl von ersten Zuführeinrichtungen 42 und die Mehrzahl von zweiten Zuführeinrichtungen 44 jeweils zum Zuführen eines Trockenmittels bzw. eines Wattebauschs in einen Behälter 4 der Mehrzahl von Behältern 4 eingerichtet sind und in Förderrichtung F beabstandet zueinander angeordnet sind.

Für den getakteten Betrieb der Verpackungsmaschine 2 ist es von Vorteil, wenn die Anzahl der Fülleinrichtungen 38, der Verschließeinrichtungen 40, der ersten Zuführeinrichtungen 42, der zweiten Zuführeinrichtungen 44 und der Sensoren 26, 30, 34 derselben vorbestimmten Anzahl entsprechen. Im dargestellten Beispiel ist die vorbestimmte Anzahl drei, sodass jeweils drei Einrichtungen 38, 40, 42, 44 sowie drei Sensoren 26, 30, 34 vorgesehen sind. Somit werden in jedem Takt der Verpackungsmaschine 2 an jeder Einheit 8, 10, Zuführung 12, 14 bzw. an der Prüfvorrichtung 16 der Verpackungsmaschine 2 drei Behälter 4 der Mehrzahl von Behältern 4 bearbeitet.

Fig. 2 zeigt ein Ausführungsbeispiel, bei dem die Prüfvorrichtung 16 in die Fülleinheit 8, die Verschließeinheit 10, die Trockenmittelzuführung 12 oder die Wattebauschzuführung 14 integriert ist. In den Fig. 2a und 2b sind zur Veranschaulichung alle Positionen mit Behältern 4 besetzt dargestellt. Es versteht sich, dass insbesondere die Anzahl, der Abstand und die Taktung der Behälter 4 beliebig an die jeweils gegebenen Anforderungen angepasst werden können.

Ist die Prüfvorrichtung 16 und somit die Mehrzahl von Sensoren 26, 30, 34 in eine der Einheiten 8, 10 bzw. Zuführungen 12, 14 integriert, ist der erste Sensor 26 vorzugsweise in Förderrichtung F zwischen zwei benachbarten Einrichtungen 38, 40, 42, 44 der jeweiligen Einheit 8, 10 bzw. Zuführung 12, 14 angeordnet. Bei der Mehrzahl von Sensoren 26, 30, 34 ist bevorzugt jeder Sensor 26, 30, 34 einer dieser Einrichtungen 38, 40, 42, 44 vor- oder nachgeschaltet. Auch der Abstand der Einrichtungen 38, 40, 42, 44 der jeweiligen Einheit 8, 10 bzw. Zuführung 12, 14 in Förderrichtung ist an die jeweils gegebenen Anforderungen anzupassen. So kann zwischen benachbarten Einrichtungen z.B. ein Behälter oder eine Mehrzahl von Behältern angeordnet sein.

Für alle hierin beschriebenen Ausführungsformen gilt, dass der erste Sensor 26 der Mehrzahl von Sensoren und/oder ein Trägerelement 46 der Mehrzahl von Trägerelementen der Prüfvorrichtung 16, von dem der zu prüfende erste Behälter 4a im Prüfbereich 28 aufgenommen ist und das daher auch als erstes Trägerelement 46 bezeichnet wird, derart beweglich ausgebildet ist, dass eine Relativbewegung zwischen dem ersten Sensor 26 und dem zu prüfenden ersten Behälter 4a in einer Bewegungsrichtung B zwischen einer ersten Anordnung und einer zweiten Anordnung erzeugbar ist. Die Bewegungsrichtung B ist senkrecht zur Förderebene 20 ausgerichtet. Der erste Sensor 26 ist in der ersten Anordnung in der Bewegungsrichtung B beabstandet zum zu prüfenden ersten Behälter 4a angeordnet und umgibt den zu prüfenden ersten Behälter 4a in der zweiten Anordnung zumindest teilweise. Es ist eine Mehrzahl von Sensoren 26, 30, 34 vorgesehen, der beschriebene Zusammenhang gilt für jeden Sensor der Mehrzahl von Sensoren 26, 30, 34 und den jeweils zu prüfenden Behälter 4a, 4b, 4c entsprechend.

Die Relativbewegung zwischen dem ersten Sensor 26 und dem zu prüfenden ersten Behälter 4a kann auf verschiedene Art und Weise erzeugt werden. Es kann entweder nur der erste Sensor 26 bewegbar sein, um die Relativbewegung zwischen der ersten Anordnung und der zweiten Anordnung zu erzeugen, während das erste Trägerelement 46 mit dem zu prüfenden ersten Behälter 4a stationär im ersten Prüfbereich 28 angeordnet ist. Dies ist beispielsweise bei der Ausführungsform nach Fig. 1 möglich, wobei die Mehrzahl von Sensoren 26, 30, 34 in Bewegungsrichtung B beweglich in der Prüfvorrichtung 16 gelagert sein können. Die Mehrzahl von Sensoren 26, 30, 34 kann in der ersten Anordnung oberhalb der zu prüfenden Behälter 4a, 4b, 4c angeordnet sein und in Bewegungsrichtung B nach unten in die zweite Anordnung bewegt werden, bis die Sensoren 26, 30, 34 die Behälter 4a, 4b, 4c umgeben. Das erste Trägerelement 46 bzw. ein zweites Trägerelement 48, von dem der zweite Behälter 4b aufgenommen ist, und ein drittes Trägerelement 50, von dem der dritte Behälter 4c aufgenommen ist, können in diesem Fall jeweils einen Abschnitt des Fördertischs 22 bilden, insbesondere auch integral mit dem Fördertisch 22 ausgebildet sein. Auch bei Ausführungsformen, bei denen die Prüfvorrichtung 16 in eine der Einheiten 8, 10 oder Zuführungen 12, 14 der Verpackungsmaschine 2 integriert ist, wie in den Fig. 2 dargestellt, kann die Mehrzahl von Sensoren 26, 30, 34 bewegbar sein und der jeweils zu prüfende Behälter 4a, 4b, 4c stationär angeordnet sein.

Alternativ kann die Relativbewegung dadurch erzeugt werden, dass die Mehrzahl von Sensoren 26, 30, 34 stationär angeordnet ist und nur das jeweilige Trägerelement 46, 48, 50 und somit der jeweils zu prüfende Behälter 4a, 4b, 4c bewegbar ist. Beispielhafte Ausführungsformen dafür sind nachfolgend unter Bezugnahme auf Fig. 2 und Fig. 4 beschrieben und analog auf die Prüfvorrichtung 16 nach Fig. 1 übertragbar, die unabhängig von den übrigen Einheiten 8, 10 und Zuführungen 12, 14 der Verpackungsmaschine 2 ausgebildet ist. Die Fördereinrichtung 18 ist aus Gründen der Übersichtlichkeit in den Fig. 2, 3 und 4 nicht dargestellt.

In einer weiteren Alternative sind sowohl die Mehrzahl von Sensoren 26, 30, 34 als auch die Mehrzahl von Trägerelementen 46,48,50 mit den zu prüfenden Behältern 4a,4b,4c bewegbar ausgebildet.

Fig. 2a zeigt die Mehrzahl von zu prüfenden Behältern 4a, 4b, 4c und die Mehrzahl von Sensoren 26, 30, 34 in der jeweiligen ersten Anordnung und Fig. 2b zeigt die Mehrzahl von zu prüfenden Behältern 4a, 4b, 4c und die Mehrzahl von Sensoren 26, 30, 34 in der jeweiligen zweiten Anordnung. Die nachfolgend beispielhaft anhand des ersten Sensors 26, des ersten Behälters 4a und des ersten Trägerelements 46 beschriebenen Merkmale treffen analog auf den zweiten Sensor 30, den zweiten Behälter 4b und das zweite Trägerelement 48 sowie auf den dritten Sensor 34, den dritten Behälter 4c und das dritte Trägerelement 50 zu.

Das erste Trägerelement 46 ist in Bewegungsrichtung B beweglich gelagert, wobei der erste Sensor 26 grundsätzlich unterhalb oder oberhalb der Förderebene 20 angeordnet sein kann. Verschiedene Beispiele für eine derartige Lagerung sind unter Bezugnahme auf Fig. 3a-3c beschrieben. Das erste Trägerelement 46 kann bezüglich der Förderebene 20 absenkbar sein, wenn der erste Sensor 26 in einer ersten Ausführungsform unterhalb der Förderebene 20 angeordnet ist, wie in Fig. 2 und 4 dargestellt. Das erste Trägerelement 46 kann aber auch bezüglich der Förderebene 20 anhebbar sein, wenn der erste Sensor 26 in einer zweiten Ausführungsform oberhalb der Förderebene 20 angeordnet ist, wie in Fig. 1 und 3c dargestellt.

Der erste Behälter 4a ist im ersten Prüfbereich 28 auf dem ersten Trägerelement 46 angeordnet, das in der ersten Anordnung bevorzugt eine Ebene mit dem Fördertisch 22 bildet. Vorzugsweise weist das erste Trägerelement 46 eine Kontaktfläche 52 auf, auf der der erste Behälter 4a steht. Die Kontaktfläche 52 liegt in der ersten Anordnung (Fig. 2a) in der Förderebene 20 und in der zweiten Anordnung (Fig. 2b) nicht in der Förderebene 20. Bevorzugt ist die Kontaktfläche 52 stets parallel zur Förderebene 20 ausgerichtet.

Sind der zu prüfende erste Behälter 4a und der erste Sensor 26 im Prüfbereich 28 relativ zueinander in der ersten Anordnung angeordnet, kann die Relativbewegung zwischen dem ersten Behälter 4a und dem ersten Sensor 26 in Bewegungsrichtung B erzeugt werden, wie in Fig. 2b dargestellt. Diese Relativbewegung wird auch als erste Relativbewegung bezeichnet. Das erste Trägerelement 46 bewegt dabei den ersten Behälter 4a aus der ersten Anordnung in die zweite Anordnung, in der der erste Sensor 26 den ersten Behälter 4a zumindest teilweise umgibt. Bevorzugt ist der erste Sensor 26 als Ringsensor ausgebildet und umgibt den ersten Behälter 4a in der zweiten Anordnung in Umfangsrichtung des ersten Behälters 4a vollständig.

Während der ersten Relativbewegung aus der ersten in die zweite Anordnung und/oder in der zweiten Anordnung erkennt der erste Sensor 26, ob ein Fremdkörper in dem ersten Behälter 4a enthalten ist und prüft den Behälter 4a somit auf Fremdkörper.

Ist der erste Behälter 4a geprüft, kann die Relativbewegung zwischen dem geprüften ersten Behälter 4a und dem ersten Sensor 26 parallel zur Bewegungsrichtung B zurück in die erste Anordnung (Fig. 2a) erzeugt werden, die auch als zweite Relativbewegung bezeichnet wird. Das erste Trägerelement 46 bewegt dabei den ersten Behälter 4a aus der zweiten Anordnung in die erste Anordnung, sodass der erste Sensor 26 wieder beabstandet zum ersten Behälter 4a angeordnet ist. Der erste Behälter 4a kann dann aus dem ersten Prüfbereich 28 gefördert werden, um im nächsten Takt das Prüfen eines weiteren Behälters 4 der Mehrzahl von Behältern 4 mittels des ersten Sensors 26 zu ermöglichen.

Wie in Fig. 2a weiterhin zu sehen ist, weist jeder Behälter 4 im Allgemeinen einen Boden 401, eine umlaufende Wand 402 und einen Hals 403 auf. Der Hals 403 bildet eine Öffnung 404 des Behälters 4, durch die die einnehmbaren Produkte in den Behälter 4 gefüllt und aus dem Behälter 4 entnommen werden können. Ein Deckel 5 (siehe Fig. 1) ist vorzugsweise auf den Behälter 4 aufgepresst oder aufgeschraubt, wobei dann der Hals 403 ein Gewinde aufweist, das mit einem Gewinde des Deckels 5 eingreift. Jeder Behälter 4 der Mehrzahl von Behältern 4 ist vorzugsweise rotationssymmetrisch um eine Mittelachse 405 ausgebildet. Die Mittelachse 405 ist vorzugsweise zumindest im Prüfbereich 28 senkrecht zur Förderebene 20 und parallel zur Bewegungsrichtung B ausgerichtet. Ferner weist jeder Behälter 4 der Mehrzahl von Behältern 4 einen Durchmesser D auf, der bevorzugt im Bereich der umlaufenden Wand 402, insbesondere im Bereich eines größten Durchmessers der umlaufenden Wand 402 zu messen ist. Eine Höhe H jedes Behälters 4 ist bevorzugt parallel zur Mittelachse 405 des Behälters 4 vom Boden 401 bis zu einem oberen Rand des Halses 403 definiert. Solche Behälter können auch als Flaschen bezeichnet werden.

In den Figuren 3a bis 3c, welche für das Verständnis der Erfindung nützlich sind, und 4 sind verschiedene Möglichkeiten zur beweglichen Lagerung zumindest des ersten Trägerelements 46 dargestellt. In Fig. 3a bis 3c ist jeweils ein Ausschnitt der Prüfvorrichtung 16 bzw. der Verpackungsmaschine 2 mit dem ersten Sensor 26 und dem ersten Behälter 4a bzw. dem ersten Trägerelement 46 in der zweiten Anordnung dargestellt.

Erfindungsgemäß treffen die dargestellten Möglichkeiten auf die Mehrzahl von Sensoren 26, 30, 34, die mehreren zu prüfenden Behälter 4a, 4b, 4c und die Mehrzahl von Trägerelementen 46, 48, 50 zu.

Bei allen Ausführungsformen der Figuren 3a bis 3c, welche für das Verständnis der Erfindung nützlich sind, umfasst die Prüfvorrichtung 16 einen Aktor 54, der mit dem ersten Trägerelement 46 verbunden oder auf dieses wirkt und dazu ausgebildet ist, das erste Trägerelement 46 parallel zur Bewegungsrichtung B zu bewegen.

In der Ausführungsform gemäß Fig. 3a ist das erste Trägerelement 46 mittels eines Vorspannelements 56 in eine Position vorgespannt, in der die erste Kontaktfläche 52 in der Förderebene 20 liegt. Das Vorspannelement 56 kann ein Federelement, wie zum Beispiel eine Druckfeder sein. Der Aktor 54 kann ein hydraulischer oder pneumatischer Aktor sein, wie zum Beispiel ein Hydraulikzylinder oder ein pneumatischer Zylinder, oder ein elektrischer, elektro-magnetischer oder mechanischer Linearantrieb sein. Der Aktor 54 ist derart angeordnet und ausgebildet, dass er mittels eines Stempels 58 entgegen einer Vorspannkraft des Vorspannelements 56 auf das erste Trägerelement 46 oder, wie dargestellt, auf den ersten Behälter 4a einwirkt. Genauer kann das Vorspannelement 56 hierzu unterhalb des ersten Trägerelements 46 angeordnet und mit diesem verbunden sein und der Aktor 54 mit dem Stempel 58 oberhalb des ersten Trägerelements 46 und des zu prüfenden ersten Behälters 4a angeordnet sein. Wird der Stempel 48 mittels des Aktors 54 in Bewegungsrichtung B nach unten bewegt, trifft der Stempel 58 auf den ersten Behälter 4a und drückt diesen samt dem ersten Trägerelement 46 aus der ersten Anordnung nach unten in die zweite Anordnung. Bei dieser ersten Relativbewegung werden das erste Trägerelement 46 und der erste Behälter 4a zumindest teilweise durch den ersten Sensor 26 hindurch bewegt. Ist die Prüfvorrichtung 16 in die Verschließeinheit 10 integriert oder nach der Verschließeinheit 10 angeordnet, trifft der Stempel 58 auf den Deckel 5 auf dem ersten Behälter 4a. Ansonsten trifft der Stempel 28 auf den Hals 403 des ersten Behälters 4a. Der erste Sensor 26 ist hier unterhalb der Förderebene 20 angeordnet und beispielsweise stationär am Fördertisch 22 angebracht.

In der Ausführungsform nach Fig. 3b ist der Aktor 54 fest mit dem ersten Trägerelement 46 verbunden, sodass eine Stellbewegung des Aktors 54 direkt auf das erste Trägerelement 46 übertragen wird. Der Aktor 54 ist hier beispielhaft als hydraulischer oder pneumatischer Zylinder dargestellt, kann aber auch durch einen beliebigen anderen Aktor gebildet sein, wie bereits beschrieben. Der erste Sensor 26 ist auch in dieser Ausführungsform unterhalb der Förderebene 20 angeordnet und beispielsweise stationär am Fördertisch 22 angebracht. Der Aktor 54 ist unterhalb des ersten Trägerelements 46 angeordnet und z.B. mittels einer Kolbenstange des Aktors 54 fest mit dem Trägerelement 46 verbunden. Der Aktor 54 bewegt das erste Trägerelement 46 samt dem zu prüfenden ersten Behälter 4a in Bewegungsrichtung B aus der ersten Anordnung in die zweite Anordnung nach unten. Bei dieser ersten Relativbewegung werden das erste Trägerelement 46 und der erste Behälter 4a zumindest teilweise durch den Sensor 26 hindurch bewegt. Das erste Trägerelement 46 ist also absenkbar.

Die Ausführungsform nach Fig. 3c entspricht im Wesentlichen der Ausführungsform nach Fig. 3b mit dem Unterschied, dass der erste Sensor 26 bezüglich der Förderebene 20 oberhalb des ersten Trägerelements 46 und des ersten Behälters 4a angeordnet ist und das erste Trägerelement 46 anhebbar ist. Der erste Sensor 26 ist bevorzugt stationär angeordnet, zum Beispiel indem er an einem Maschinengestell der Prüfvorrichtung 16 oder der Verpackungsmaschine 2 befestigt ist. Der erste Sensor 26 kann aber auch beweglich gelagert sein, sodass sowohl das erste Trägerelement 46 als auch der erste Sensor 26 bewegbar sind. Der Aktor 54 ist erneut als hydraulischer oder pneumatischer Zylinder dargestellt, kann aber beliebig ausgebildet sein. Der Aktor 54 ist unterhalb des ersten Trägerelements 46 angeordnet und bewegt das erste Trägerelement 46 samt dem zu prüfenden ersten Behälter 4a in Bewegungsrichtung B aus der ersten Anordnung in die zweite Anordnung nach oben. Auch bei dieser ersten Relativbewegung werden das erste Trägerelement 46 und der erste Behälter 4a zumindest teilweise durch den Sensor 26 hindurch bewegt.

In Fig. 4 ist die Mehrzahl von Sensoren, hier umfassend den ersten, den zweiten und den dritten Sensor 26, 30, 34, in Förderrichtung F hintereinander angeordnet. Jedem Sensor 26, 30, 34 ist ein Trägerelement 46, 48, 50 der Mehrzahl von Trägerelementen 46, 48, 50 zugeordnet, um jeweils einen der zu prüfenden Behälter 4 durch den jeweiligen Sensor 26, 30, 34 zu bewegen. In Fig. 4 ist die Mehrzahl von Trägerelementen 46, 48, 50 derart angeordnet, dass ihre Kontaktfläche 52 in der Förderebene 20 liegt, um die Behälter in der ersten Anordnung relativ zu der Mehrzahl von Sensoren 26, 30, 34 zu positionieren. Die Mehrzahl von Sensoren 26, 30, 34 ist unterhalb der Förderebene 20 angeordnet, vorzugsweise stationär.

Die Mehrzahl von Trägerelementen 46, 48, 50 ist in der dargestellten Ausführungsform bezüglich der Förderebene 20 absenkbar. Um die Trägerelemente 46, 48, 50 synchron zu bewegen, sind sie vorzugsweise mittels eines Verbindungselements 62 miteinander verbunden. Zum Beispiel ist das Verbindungselement 62 leistenförmig ausgebildet und parallel zur Förderrichtung F angeordnet. Jedes Trägerelement 46, 48, 50 kann mittels eines Stützelements 64 mit dem Verbindungselement 62 verbunden sein, wobei das Stützelement 64 in Fig. 4 gestrichelt angedeutet ist, stabförmig ausgebildet sein kann, und sich vom Verbindungselement 62 senkrecht zur Förderrichtung F nach oben erstrecken kann. Jedes Stützelement 64 kann von einer vorzugsweise stationär angeordneten Hülse 66 umgeben sein. Um die Mehrzahl von Trägerelementen 46, 48, 50 abzusenken ist das Verbindungselement 62 beweglich an einer Linearführung 68 gelagert, beispielsweise mittels eines Schlittens. Die Linearführung 68 erstreckt sich vorzugsweise im Wesentlichen senkrecht zur Förderebene 20. Der Aktor 54 kann hier als Servomotor ausgebildet sein und das Verbindungselement 68 z.B. mittels eines Riemenantriebs 70 entlang der Linearführung 68 auf und ab bewegen. Alternative Antriebsarten sind ohne Weiteres vorstellbar.

In allen Ausführungsformen ist die Mehrzahl von Sensoren 26, 30, 34 vorzugsweise als Ringsensor ausgebildet, der den jeweils zu prüfenden Behälter 4a, 4b, 4c in der zweiten Anordnung in Umfangsrichtung des Behälters 4a, 4b, 4c vollständig umgibt. Beispielhaft ist anhand der Fig. 3c erläutert, dass der jeweilige Sensor 26 dann eine Öffnung 60 aufweist, die vorzugsweise als Durchgangsöffnung ausgebildet ist und in die der zu prüfende Behälter 4a einführbar ist. Ein Innenumfang des ersten Sensors 26 entspricht einem Innenumfang dieser Öffnung 60. Ein Innendurchmesser I des ringförmigen ersten Sensors 26 entspricht dem Durchmesser der Öffnung 60 und ist größer als der Durchmesser D des ersten Behälters 4a.

## Patentansprüche

1. Prüfvorrichtung (16) für eine Verpackungsmaschine (2) zum Verpacken von einnehmbaren Produkten, insbesondere von medizinischen oder pharmazeutischen Produkten oder von Nahrungs- oder Nahrungsergänzungsmitteln, in Behälter (4), wobei die Prüfvorrichtung (16) umfasst:
eine Fördereinrichtung (18), die dazu eingerichtet ist, eine Mehrzahl von Behältern (4) getaktet in einer Förderebene (20) in eine Förderrichtung (F) durch die Prüfvorrichtung (16) zu fördern;
eine Mehrzahl von Sensoren (26, 30), wobei jeder Sensor (26, 30) der Mehrzahl von Sensoren (26, 30) in einem Prüfbereich (28, 32) der Prüfvorrichtung (16) angeordnet ist und zum Detektieren von Fremdkörpern, insbesondere von metallischen Fremdkörpern, in einem zu prüfenden Behälter (4a) der Mehrzahl von Behältern (4) eingerichtet ist; und
eine Mehrzahl von Trägerelementen (46, 48), wobei jeweils ein zu prüfender Behälter (4a, 4b) der Mehrzahl von Behältern (4) in einem Prüfbereich (28, 32) von einem Trägerelement (46, 48) der Mehrzahl von Trägerelementen (46, 48) aufgenommen ist;
wobei die Mehrzahl von Sensoren (26, 30) und/oder die Mehrzahl von Trägerelementen (46, 48) der Prüfvorrichtung (16), von denen die zu prüfenden Behälter (4a, 4b) im Prüfbereich (28, 32) aufgenommen sind, derart beweglich ausgebildet ist, dass eine Relativbewegung zwischen der Mehrzahl von Sensoren (26, 30) und den zu prüfenden Behältern (4a, 4b) in einer Bewegungsrichtung (B) zwischen einer ersten Anordnung und einer zweiten Anordnung erzeugbar ist, wobei die Bewegungsrichtung (B) senkrecht zur Förderebene (20) ausgerichtet ist; wobei die Mehrzahl von Sensoren (26, 30) in der ersten Anordnung in der Bewegungsrichtung (B) beabstandet zu den zu prüfenden Behältern (4a, 4b) angeordnet ist und wobei die Mehrzahl von Sensoren (26, 30) in der zweiten Anordnung die zu prüfenden Behälter (4a, 4b) zumindest teilweise umgibt;
wobei
die Sensoren (26, 30) der Mehrzahl von Sensoren (26, 30) in Förderrichtung (F) hintereinander angeordnet sind.

2. Prüfvorrichtung (16) nach Anspruch 1, **dadurch gekennzeichnet, dass** die Sensoren (26, 30) der Mehrzahl von Sensoren (26, 30) ringförmig ausgebildet sind und in der zweiten Anordnung die zu prüfenden Behälter (4a, 4b) in Umfangsrichtung der zu prüfenden Behälter (4a, 4b) jeweils vollständig umgeben.

3. Prüfvorrichtung (16) nach Anspruch 1 oder 2, **dadurch gekennzeichnet, dass** die Mehrzahl von Trägerelementen (46, 48) derart ausgebildet ist, dass sie die zu prüfenden Behälter (4a, 4b) im Prüfbereich (28, 32) von unten stützen und dass sie in Bewegungsrichtung (B) bewegbar sind.

4. Prüfvorrichtung (16) nach Anspruch 3, **dadurch gekennzeichnet, dass** eine Kontaktfläche (52) der Mehrzahl von Trägerelementen (46, 48), auf der der zu prüfende Behälter (4a) angeordnet ist, in der ersten Anordnung in der Förderebene (20) liegt und in der zweiten Anordnung nicht in der Förderebene (20) liegt.

5. Prüfvorrichtung (16) nach einem der vorangehenden Ansprüche, **dadurch gekennzeichnet, dass** die Mehrzahl von Sensoren (26, 30) unterhalb der Förderebene (20) angeordnet ist und die Mehrzahl von Trägerelementen (46, 48) bezüglich der Förderebene (20) absenkbar ist.

6. Prüfvorrichtung (16) nach einem der vorangehenden Ansprüche, **dadurch gekennzeichnet, dass** die Trägerelemente (46, 48) der Mehrzahl von Trägerelementen (46, 48) bezüglich der Förderebene (20) absenkbar sind und derart miteinander verbunden sind, dass sie synchron bewegbar sind.

7. Prüfvorrichtung (16) nach einem der vorangehenden Ansprüche, **dadurch gekennzeichnet, dass** zumindest zwei Sensoren (26, 30) der Mehrzahl von Sensoren (26, 30) mit einer unterschiedlichen Frequenz betreibbar sind.

8. Verpackungsmaschine (2) zum Verpacken von einnehmbaren Produkten, insbesondere von medizinischen oder pharmazeutischen Produkten oder von Nahrungs- oder Nahrungsergänzungsmitteln, in Behälter (4), wobei die Verpackungsmaschine (2) umfasst:
eine Zuführeinheit (6), die zum Zuführen einer Mehrzahl von Behältern (4) in die Verpackungsmaschine (2) eingerichtet ist;
eine Fülleinheit (8), die zum Füllen der Mehrzahl von Behältern (4) mit den einnehmbaren Produkten eingerichtet ist;
eine Verschließeinheit (10), die zum Verschließen der Mehrzahl von Behältern (4) mit jeweils einem Deckel (5) eingerichtet ist; und
eine Prüfvorrichtung (16) gemäß einem der Ansprüche 1 bis 7 zum Prüfen der Mehrzahl von Behältern (4) auf Fremdkörper, insbesondere metallische Fremdkörper, darin.

9. Verpackungsmaschine (2) nach Anspruch 8, **dadurch gekennzeichnet, dass** die Fördereinrichtung (18) der Prüfvorrichtung (16) dazu eingerichtet ist, die Mehrzahl von Behältern (4) getaktet durch die Fülleinheit (8), die Verschließeinheit (10) und die Prüfvorrichtung (16) zu fördern.

10. Verpackungsmaschine (2) nach Anspruch 8 oder 9, **dadurch gekennzeichnet, dass** die Prüfvorrichtung (16) vor der Verschließeinheit (10), insbesondere zwischen der Fülleinheit (8) und der Verschließeinheit (10), angeordnet ist.

11. Verfahren zum Prüfen von Behältern (4) für einnehmbare Produkte, insbesondere für medizinische oder pharmazeutische Produkte oder für Nahrungs- oder Nahrungsergänzungsmittel, mittels einer Prüfvorrichtung (16) nach einem der Ansprüche 1 bis 7, wobei das Verfahren die folgenden Schritte umfasst:
a) Fördern einer Mehrzahl von Behältern (4) getaktet in einer Förderebene (20) in eine Förderrichtung (F);
b) Anordnen zu prüfender Behälter (4a, 4b) der Mehrzahl von Behältern (4) in einem Prüfbereich (28, 32) in einer ersten Anordnung relativ zu einer Mehrzahl von Sensoren (26, 30) zum Detektieren von Fremdkörpern, insbesondere von metallischen Fremdkörpern, wobei die Mehrzahl von Sensoren (26, 30) in der ersten Anordnung in einer Bewegungsrichtung (B) beabstandet zu den zu prüfenden Behältern (4a, 4b) angeordnet ist, wobei die Bewegungsrichtung (B) senkrecht zur Förderebene (20) ausgerichtet ist;
c) Erzeugen einer ersten Relativbewegung zwischen den zu prüfenden Behältern (4a, 4b) und der Mehrzahl von Sensoren (26, 30) in der Bewegungsrichtung (B) aus der ersten Anordnung in eine zweite Anordnung, in der die Mehrzahl von Sensoren (26, 30) die zu prüfenden Behälter (4a, 4b) zumindest teilweise umgibt;
d) Erkennen mittels der Mehrzahl von Sensoren (26, 30), ob ein Fremdkörper in den zu prüfenden Behältern (4a, 4b) enthalten ist, und dadurch Prüfen der Behälter (4a, 4b);
e) Erzeugen einer zweiten Relativbewegung zwischen den geprüften Behältern(4a, 4b) und der Mehrzahl von Sensoren (26, 30) parallel zur Bewegungsrichtung (B) zurück in die erste Anordnung; und
f) Fördern der geprüften Behälter (4a, 4b) aus dem Prüfbereich (28, 32), vorzugsweise in der Förderebene (20) in Förderrichtung (F).

12. Verfahren nach Anspruch 11, **dadurch gekennzeichnet, dass** Schritt c) umfasst:
Absenken des zu prüfenden Behälters (4a) bezüglich der Förderebene (20), wobei die Mehrzahl von Sensoren (26, 30) unterhalb der Förderebene (20) angeordnet ist.

13. Verfahren nach Anspruch 11 oder 12, **dadurch gekennzeichnet, dass** die Empfindlichkeit der Mehrzahl von Sensoren (26, 30) einstellbar ist und das Verfahren weiterhin umfasst:
Einstellen der Empfindlichkeit der Mehrzahl von Sensoren (26, 30) in Abhängigkeit der einnehmbaren Produkte.

## Claims

1. A testing device (16) for a packaging machine (2) for packaging products, in particular medical or pharmaceutical products or foodstuffs or dietary supplements, in containers (4), wherein the testing device (16) comprises:
a conveying device (18), which is configured to convey a plurality of containers (4) in a clocked fashion in a conveying plane (20) in a conveying direction (F) through the testing device (16);
a plurality of sensors (26, 30), wherein each sensor (26, 30) of the plurality of sensors (26, 30) is arranged in a testing region (28, 32) of the testing device (16) and is configured to detect foreign bodies, in particular metal foreign bodies, in a container (4a) to be tested of the plurality of containers (4); and
a plurality of carrier elements (46, 48), wherein in each case a container (4a, 4b) to be tested of the plurality of containers (4) is received in a testing region (28, 32) by a carrier element (46, 48) of the plurality of carrier elements (46, 48);
wherein the plurality of sensors (26, 30) and/or the plurality of carrier elements (46, 48) of the testing device (16), by which the containers (4a, 4b) to be tested are received in the testing region (28, 32), are formed movably in such a way that a relative movement between the plurality of sensors (26, 30) and the containers (4a, 4b) to be tested in a movement direction (B) between a first arrangement and a second arrangement can be generated, wherein the movement direction (B) is oriented perpendicularly to the conveying plane (20); wherein the plurality of sensors (26, 30) in the first arrangement is arranged in the movement direction (B) at a distance from the containers (4a, 4b) to be tested, and wherein the plurality of sensors (26, 30) in the second arrangement at least partially surrounds the containers (4a, 4b) to be tested;
wherein the sensors (26, 30) of the plurality of sensors (26, 30) are arranged one behind the other in the conveying direction (F).

2. The testing device (16) according to claim 1, **characterised in that** the sensors (26, 30) of the plurality of sensors (26, 30) are annular and in the second arrangement the containers (4a, 4b) to be tested are each completely surrounded in the circumferential direction of the containers (4a, 4b) to be tested.

3. The testing device (16) according to claim 1 or 2, **characterised in that** the plurality of carrier elements (46, 48) is formed in such a way that they support the containers (4a, 4b) to be tested from beneath in the testing region (28, 32) and that they are movable in the movement direction (B).

4. The testing device (16) according to claim 3, **characterised in that** a contact face (52) of the plurality of carrier elements (46, 48), on which the container (4a) to be tested is arranged, in the first arrangement lies in the conveying plane (20) and in the second arrangement does not lie in the conveying plane (20).

5. The testing device (16) according to any one of the preceding claims, **characterised in that** the plurality of sensors (26, 30) is arranged beneath the conveying plane (20) and the plurality of carrier elements (46, 48) can be lowered relative to the conveying plane (20).

6. The testing device (16) according to any one of the preceding claims, **characterised in that** the carrier elements (46, 48) of the plurality of carrier elements (46, 48) can be lowered relative to the conveying plane (20) and are connected to one another in such a way that they are movable synchronously.

7. The testing device (16) according to any one of the preceding claims, **characterised in that** at least two sensors (26, 30) of the plurality of sensors (26, 30) are operable with a different frequency.

8. A packaging machine (2) for packaging ingestible products, in particular medical or pharmaceutical products or foodstuffs or dietary supplements, in containers (4), wherein the packaging machine (2) comprises:
a feed unit (6), which is configured to feed a plurality of containers (4) into the packaging machine (2);
a filling unit (8), which is configured to fill the plurality of containers (4) with the ingestible products;
a closing unit (10), which is configured to close the plurality of containers (4) with a lid (5) in each case; and
a testing device (16) according to any one of claims 1 to 7 for testing the plurality of containers (4) for foreign bodies, in particular metal foreign bodies, therein.

9. The packaging machine (2) according to claim 8, **characterised in that** the conveying device (18) of the testing device (16) is configured to convey the plurality of containers (4) in a clocked fashion through the filling unit (8), the closing unit (10) and the testing device (16).

10. The packaging machine (2) according to claim 8 or 9, **characterised in that** the testing device (16) is arranged before the closing unit (10), in particular between the filling unit (8) and the closing unit (10).

11. A method for testing containers (4) for ingestible products, in particular for medical or pharmaceutical products or for foodstuffs or dietary supplements, by means of a testing device (16) according to any one of claims 1 to 7, wherein the method comprises the following steps:
a) conveying a plurality of containers (4) in a clocked fashion in a conveying plane (20) in a conveying direction (F);
b) arranging containers (4a, 4b) to be tested of the plurality of containers (4) in a testing region (28, 32) in a first arrangement relative to a plurality of sensors (26, 30) for detection of foreign bodies, in particular of metal foreign bodies, wherein the plurality of sensors (26, 30) in the first arrangement in a movement direction (B) is arranged at a distance from the containers (4a, 4b) to be tested, wherein the movement direction (B) is oriented perpendicularly to the conveying plane (20);
c) generating a first relative movement between the containers (4a, 4b) to be tested and the plurality of sensors (26, 30) in the movement direction (B) from the first arrangement into a second arrangement, in which the plurality of sensors (26, 30) at least partially surrounds the containers (4a, 4b) to be tested;
d) identifying by means of the plurality of sensors (26, 30) whether a foreign body is contained in the containers (4a, 4b) to be tested, and thus testing the containers (4a, 4b);
e) generating a second relative movement between the tested containers (4a, 4b) and the plurality of sensors (26, 30) parallel to the movement direction (B) back into the first arrangement; and
f) conveying the tested containers (4a, 4b) from the testing region (28, 32), preferably in the conveying plane (20) in the conveying direction (F).

12. The method according to claim 11, **characterised in that** step c) comprises:
lowering the container (4a) to be tested relative to the conveying plane (20), wherein the plurality of sensors (26, 30) is arranged below the conveying plane (20).

13. The method according to claim 11 or 12, **characterised in that** the sensitivity of the plurality of sensors (26, 30) is adjustable and the method further comprises:
adjusting the sensitivity of the plurality of sensors (26, 30) in dependence on the ingestible products.

## Revendications

1. Dispositif d'inspection (16) d'une machine de conditionnement (2) destinée à conditionner des produits ingérables, notamment des produits médicaux ou pharmaceutiques ou des produits alimentaires ou des compléments alimentaires dans des contenants (4), le dispositif d'inspection (16) comprenant :
un système de convoyage (18), qui est configuré pour convoyer de manière cadencée une pluralité de contenants (4) dans un plan de convoyage (20) dans une direction de convoyage (F) à travers le dispositif d'inspection (16) ;
une pluralité de capteurs (26, 30), chaque capteur (26, 30) de la pluralité de capteurs (26, 30) étant placé dans une zone d'inspection (28, 32) du dispositif d'inspection (16) et étant configuré pour détecter des corps étrangers, notamment des corps étrangers métalliques, dans un contenant (4a) qui doit être inspecté de la pluralité de contenants (4) ; et
une pluralité d'éléments porteurs (46, 48), chaque fois un contenant (4a, 4b) qui doit être inspecté de la pluralité de contenants (4) étant réceptionné dans une zone d'inspection (28, 32) par un élément porteur (46, 48) de la pluralité d'éléments porteurs (46, 48) ;
la pluralité de capteurs (26, 30) et / ou la pluralité d'éléments porteurs (46, 48) du dispositif d'inspection (16), par lesquels les contenants (4a, 4b) qui doivent être inspectés sont réceptionnés dans la zone d'inspection (28, 32) étant conçus de manière déplaçable de telle sorte qu'un déplacement relatif entre la pluralité de capteurs (26, 30) et les contenants (4a, 4b) qui doivent être inspectés puisse être généré dans une direction de déplacement (B) entre un premier agencement et un deuxième agencement, la direction de déplacement (B) étant orientée à la perpendiculaire du plan de convoyage (20) ; la pluralité de capteurs (26, 30) dans le premier agencement étant placé dans la direction de déplacement (B) avec un écart par rapport aux contenants (4a, 4b) et la pluralité de capteurs (26, 30) dans le deuxième agencement entourant au moins partiellement les contenants (4a, 4b) qui doivent être inspectés ;
les capteurs (26, 30) de la pluralité de capteurs (26, 30) étant placés les uns derrière les autres dans la direction de convoyage (F).

2. Dispositif d'inspection (16) selon la revendication 1, **caractérisé en ce que** les capteurs (26, 30) de la pluralité de capteurs (26, 30) sont conçus de forme annulaire et dans le deuxième agencement, entourent chaque fois totalement les contenants (4a, 4b) qui doivent être inspectés dans la direction périphérique des contenants (4a, 4b) qui doivent être inspectés.

3. Dispositif d'inspection (16) selon la revendication 1 ou 2, **caractérisé en ce que** la pluralité d'éléments porteurs (46, 48) est conçue de telle sorte qu'ils soutiennent par le bas les contenants (4a, 4b) qui doivent être inspectés dans la zone d'inspection (28, 32) et qu'ils soient déplaçables dans la direction de déplacement (B).

4. Dispositif d'inspection (16) selon la revendication 3, **caractérisé en ce qu'**une surface de contact (52) de la pluralité d'éléments porteurs (46, 48) sur laquelle le contenant (4a) qui doit être inspecté est placé se situe dans le plan de convoyage (20) dans le premier agencement et ne se situe pas dans la plan de convoyage (20) dans le deuxième agencement.

5. Dispositif d'inspection (16) selon l'une quelconque des revendications précédentes, **caractérisé en ce que** la pluralité de capteurs (26, 30) est placée en-dessous du plan de convoyage (20) et la pluralité d'éléments porteurs (46, 48) est abaissable par rapport au plan de convoyage (20).

6. Dispositif d'inspection (16) selon l'une quelconque des revendications précédentes, **caractérisé en ce que** les éléments porteurs (46, 48) de la pluralité d'éléments porteurs (46, 48) sont abaissables par rapport au plan de convoyage (20) et sont reliés les uns avec les autres de sorte à être déplaçables de manière synchrone.

7. Dispositif d'inspection (16) selon l'une quelconque des revendications précédentes, **caractérisé en ce qu'**au moins deux capteurs (26, 30) de la pluralité de capteurs (26, 30) sont utilisables à différentes fréquences.

8. Machine de conditionnement (2), destinée à conditionner des produits ingérables, notamment des produits médicaux ou pharmaceutiques ou des produits alimentaires ou des compléments alimentaires dans des contenants (4), la machine de conditionnement (2) comprenant :
une unité d'amenage (6), qui est configurée pour amener une pluralité de contenants (4) dans la machine de conditionnement (2) ;
une unité de remplissage (8), qui est configurée pour remplir la pluralité de contenants (4) avec les produits ingérables ;
une unité de fermeture (10), qui est configurée pour fermer la pluralité de contenants (4) avec chaque fois un couvercle (5) ; et
un dispositif d'inspection (16) selon l'une quelconque des revendications 1 à 7, destiné à inspecter la pluralité de contenants (4) au niveau de la présence de corps étrangers, notamment de corps étrangers métalliques en leur intérieur.

9. Machine de conditionnement (2) selon la revendication 8, **caractérisée en ce que** le système de convoyage (18) du dispositif d'inspection (16) est configuré pour convoyer la pluralité de contenants (4) de manière cadencée à travers l'unité de remplissage (8), l'unité de fermeture (10) et le dispositif d'inspection (16).

10. Machine de conditionnement (2) selon la revendication 8 ou 9, **caractérisée en ce que** le dispositif d'inspection (16) est placé à l'avant de l'unité de fermeture (10), notamment entre l'unité de remplissage (8) et l'unité de fermeture (10).

11. Procédé, destiné à inspecter des contenants (4) de produits ingérables, notamment de produits médicaux ou pharmaceutiques ou de produits alimentaires ou de compléments alimentaires au moyen d'un dispositif d'inspection (16) selon l'une quelconque des revendications 1 à 7, le procédé comprenant les étapes suivantes, consistant à :
a) convoyer une pluralité de contenants (4) de manière cadencée dans un plan de convoyage (20) dans une direction de convoyage (F) ;
b) placer des contenants (4a, 4b) qui doivent être inspectés de la pluralité de contenants (4) dans une zone d'inspection (28, 32), dans un premier agencement par rapport à une pluralité de capteurs (26, 30), pour la détection de corps étrangers, notamment de corps étrangers métalliques, la pluralité de capteurs (26, 30) dans le premier agencement étant placée avec un écart dans la direction de déplacement (B) par rapport aux contenants (4a, 4b) qui doivent être inspectés, la direction de déplacement (B) étant orientée à la perpendiculaire du plan de convoyage (20) ;
c) générer un premier déplacement relatif entre les contenants (4a, 4b) qui doivent être inspectés et la pluralité de capteurs (26, 30) dans la direction de déplacement (B), du premier agencement en un deuxième agencement, dans lequel la pluralité de capteurs (26, 30) entoure au moins partiellement les contenants (4a, 4b) qui doivent être inspectés ;
d) identifier au moyen de la pluralité de capteurs (26, 30), si un corps étrangers est contenu dans les contenants (4a, 4b) qui doivent être inspectés et de ce fait, inspecter les contenants (4a, 4b) ;
e) générer un deuxième déplacement relatif entre les contenants (4a, 4b) inspectés et la pluralité de capteurs (26, 30), à la parallèle de la direction de déplacement (B), en retour dans le premier agencement ; et
f) convoyer les contenants (4a, 4b) inspectés hors de la zone d'inspection (28, 32), de préférence dans le plan de convoyage (20) dans la direction de convoyage (F).

12. Procédé selon la revendication 11, **caractérisé en ce que** l'étape c) comprend :
l'abaissement du contenant (4a) qui doit être inspecté en rapport au plan de convoyage (20), la pluralité de capteurs (26, 30) étant placée en-dessous du plan de convoyage (20).

13. Procédé selon la revendication 11 ou 12, **caractérisé en ce que** la sensibilité de la pluralité de capteurs (26, 30) est réglable et **en ce que** le procédé comprend par ailleurs :
le réglage de la sensibilité de la pluralité de capteurs (26, 30) en fonction des produits ingérables.
